(19) Europäisches Patentamt
European Patent Office
Office européen des brevets

(11) EP 3 094 699 B1

(12) **FASCICULE DE BREVET EUROPEEN**

(45) Date de publication et mention de la délivrance du brevet:
**06.02.2019 Bulletin 2019/06**

(21) Numéro de dépôt: **15700674.3**

(22) Date de dépôt: **15.01.2015**

(51) Int Cl.:
***C09J 163/00*** *(2006.01)* ***B27N 1/02*** *(2006.01)*
***B65D 39/00*** *(2006.01)* ***C08L 97/00*** *(2006.01)*

(86) Numéro de dépôt international:
**PCT/EP2015/050684**

(87) Numéro de publication internationale:
**WO 2015/107114 (23.07.2015 Gazette 2015/29)**

(54) **ASSOCIATION LIÈGE/LIANT À BASE DE POLYÉPOXYDE ET SON PROCÉDÉ DE PRÉPARATION**

KOMBINATION AUS KORK/POLYEPOXIDBINDEMITTEL UND VERFAHREN ZUR HERSTELLUNG DAVON

COMBINATION OF CORK / POLYEPOXIDE BINDER AND METHOD FOR MANUFACTURING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.01.2014 FR 1450319**

(43) Date de publication de la demande:
**23.11.2016 Bulletin 2016/47**

(73) Titulaires:
- **DIAM BOUCHAGE**
  **66400 Ceret (FR)**
- **Centre National de la Recherche Scientifique (C.N.R.S.)**
  **75016 Paris (FR)**
- **Ecole Nationale Supérieure de Chimie de Montpellier**
  **34296 Montpellier Cedex 5 (FR)**
- **Université Montpellier 2, Sciences et Techniques**
  **34095 Montpellier Cedex 5 (FR)**

(72) Inventeurs:
- **DARROMAN, Emilie**
  **F-33460 Arsac (FR)**
- **BALBUSQUIER, Clothilde**
  **12850 Sainte Radegonde (FR)**
- **CAILLOL, Sylvain**
  **F-34090 Montpellier (FR)**
- **BOUTEVIN, Bernard**
  **F-34090 Montpellier (FR)**
- **AUVERGNE, Rémi**
  **F-34000 Montpellier (FR)**
- **LOISEL, Christophe**
  **F-66180 Villeneuve de la Raho (FR)**
- **TOURNEIX, Dominique**
  **F-66240 Saint Esteve (FR)**

(74) Mandataire: **Casalonga**
**Casalonga & Partners**
**Bayerstraße 71/73**
**80335 München (DE)**

(56) Documents cités:
**US-A- 2 904 524** **US-A- 2 993 014**
**US-A- 3 457 202** **US-B2- 8 283 394**

- **FANNY JAILLET ET AL: "New biobased epoxy materials from cardanol", EUROPEAN JOURNAL OF LIPID SCIENCE AND TECHNOLOGY, vol. 116, no. 1, 3 janvier 2014 (2014-01-03), pages 63-73, XP055146528, ISSN: 1438-7697, DOI: 10.1002/ejlt.201300193**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 094 699 B1

## Description

La présente invention est relative à une composition comprenant du liège ou un matériau à base de liège et un liant qui comprend au moins un polyépoxyde, son procédé de préparation, un procédé de fabrication d'un bouchon et l'utilisation de polymères synthétisés par ouverture de fonctions époxydes comme adhésifs pour le liège ou matériau à base de liège.

Le liège est un matériau naturel, imperméable et léger, qui provient de l'écorce de certaines espèces de chênes, telles que les chênes-lièges, qui se trouvent typiquement dans les pays du pourtour méditerranéen, en Europe et en Afrique du Nord.

Le liège trouve notamment son utilisation dans la fabrication de bouchons, qui servent à boucher des récipients tels que des bouteilles contenant des liquides destinés à l'alimentation, en particulier, du vin.

Le liège est un matériau élastique, résilient, comprimable et imperméable aux liquides, ayant en même temps une perméabilité aux gaz suffisante pour permettre un échange nécessaire à la maturation du produit en bouteille, et présentant un fort coefficient de friction.

De très nombreuses recherches ont été menées pour tenter de mettre au point des compositions dont les propriétés se rapprochent de celles du liège naturel et qui permettent de le remplacer notamment pour la fabrication de bouchons, par exemple de bouchons destinés à fermer les bouteilles de vin. Le brevet US8283394 concerne un procédé de fabrication d'un article moulé, qui peut être un bouchon, à partir d'un composition de liège comprenant un liant à base de polymère thermoplastique.

En effet, la récolte du liège est limitée à quelques régions du monde dans lesquelles la culture des chênes-lièges est rentable, et la production de liège naturel équilibre à peine les besoins. Ces recherches ont conduit à fabriquer des bouchons en liège aggloméré constitué de particules de liège et d'un liant ou colle qui assure la cohésion du bouchon.

On a aussi essayé de fabriquer des bouchons entièrement synthétiques, notamment à base de polyéthylène ou d'autres matières plastiques.

Cependant, tous les bouchons, leurs procédés de fabrication et leur composition connus ont des inconvénients et n'utilisent pas que des matières premières naturelles.

Il existe donc un besoin de produire une composition obtenue à partir de matières premières naturelles non fortement toxiques, présentant à la fois de bonnes propriétés mécaniques et organoleptiques. Par « matières premières non fortement toxiques », on entend au sens de la présente invention, des matières premières qui ne sont pas des molécules classées cancérigènes-mutagènes-reprotoxiques (ou CMR), classes 1A, 1B et 2.

L'invention vise à satisfaire ce besoin en proposant une nouvelle composition comprenant du liège ou un matériau à base de liège, et un liant comprenant un ou plusieurs polyépoxydes tels que définis ci-dessous, ce liant étant de préférence partiellement ou totalement biosourcé.

Par le terme «biosourcé », on entend au sens de la présente invention un composé issu de la biomasse ayant subi ou non un traitement chimique, et n'étant pas classé CMR, classes 1A, 1B et 2. A titre d'exemples de biomasse, on peut notamment citer les extraits de végétaux, d'arbres, de vigne, de fruits, de légumes ou d'algues.

La composition selon l'invention est notamment destinée à la fabrication de bouchons, notamment pour bouteilles de vins tranquilles, effervescents ou spiritueux ou solutions aqueuses comme les jus de fruits, ou les huiles. Les bouchons, ainsi produits et contenant au moins une partie de liège aggloméré à base d'un liant, gardent les avantages du liège naturel, avec des caractéristiques physiques voisines voire supérieures et avec un aspect extérieur similaire à celui du liège naturel.

De plus, les bouchons ne présentent pas les inconvénients des bouchons synthétiques connus, notamment pour leur manque d'élasticité, leur faible étanchéité au gaz au cours du temps et leur aspect extérieur différent du liège naturel.

Ainsi, la composition peut être appliquée à l'ensemble des bouchons avec au moins une partie agglomérée comme c'est le cas pour les bouchons à champagne ou vins effervescents, les bouchons avec une ou plusieurs rondelles à une ou aux deux extrémités (1+1, 2+2, 0+2 ou toute autre combinaison possible).

La composition peut être obtenue par procédé de moulage ou par extrusion ou par tout procédé thermique permettant de faire réagir les ingrédients de la composition dans les conditions de température et temps adéquates à l'invention.

Cette composition selon l'invention permet d'obtenir un bouchon présentant à la fois de bonnes propriétés mécaniques, organoleptique et d'hydrophobicité.

Un premier objet de la présente invention est donc une composition comprenant du liège ou un matériau à base de liège et un liant qui comprend un ou plusieurs polyépoxydes résultant du mélange d'un ou de plusieurs composés (A) comportant deux ou plus de deux groupes époxys avec un ou plusieurs composés (B) comportant deux ou plus de deux groupes amines et tels que définis ci-après.

Un autre objet concerne une composition comprenant du liège ou un matériau à base de liège, un ou plusieurs composés (A) comportant deux ou plus de deux groupes époxys et un ou plusieurs composés (B) comportant deux ou

plus de deux groupes amines tels que définis ci-après.

Dans l'invention, les composés (A) et (B) sont non-fortement toxiques, et de préférence biosourcés.

L'invention a encore pour objet un procédé de préparation de ladite composition.

Un autre objet encore est un procédé de fabrication de bouchons mettant en oeuvre une telle composition.

L'invention a encore pour objet un bouchon susceptible d'être obtenu par le procédé de fabrication.

D'autres caractéristiques et avantages de l'invention apparaîtront plus clairement à la lecture de la description et des exemples qui suivent.

Dans ce qui va suivre, et à moins d'une autre indication, les bornes d'un domaine de valeurs sont comprises dans ce domaine, notamment dans les expressions « compris entre » et « allant de ... à ... ».

Par ailleurs, l'expression « au moins un » utilisée dans la présente description est équivalente à l'expression « un ou plusieurs ».

Selon l'invention, la composition comprend du liège ou un matériau à base de liège et un liant comprenant un ou plusieurs polyépoxydes résultant du mélange d'un ou de plusieurs composés (A) comportant deux ou plus de deux groupes époxys avec un ou plusieurs composés (B) comportant deux ou plus de deux groupes amines, et tels que définis ci-après, les composés (A) et (B) étant non fortement toxiques, i.e. les composés (A) et (B) n'étant pas desmolécules classées cancérigènes-mutagènes-reprotoxiques (ou CMR), classes 1A, 1B et 2.

Le liège ou le matériau à base de liège pouvant être utilisé dans l'invention se trouve notamment sous la forme d'une farine, de granulés présentant de préférence une granulométrie de 0,01 mm jusqu'à 8 mm, de plaques, de rondelles de liège issues du tubage de plaques de liège, de préférence sous la forme d'une farine.

La granulométrie peut être mesurée par exemple par la méthode des tamis, à température ambiante (20-25 °C).

Le liège ou matériau à base de liège est présent de préférence en une quantité allant de 1 à 95 % en poids, mieux de 10 à 90 % en poids, et encore mieux de 50 à 85 % en poids par rapport au poids total de la composition.

Les polyépoxydes utilisés dans la composition selon l'invention sont de préférence partiellement ou totalement biosourcés. Ils sont préparés à partir de matières premières, à savoir les composés (A) et (B), non-fortement toxiques, et de préférence biosourcées comme précisé précédemment, à savoir des matières premières issues de la biomasse et n'étant pas classées CMR, classes 1A, 1B et 2.

La réaction entre au moins un composé (A) comportant au moins deux groupes époxy et au moins un composé (B) comportant au moins deux groupes amines peut être représentée par exemple par le schéma suivant, dans le cas où (B) comporte des groupes amines primaires :

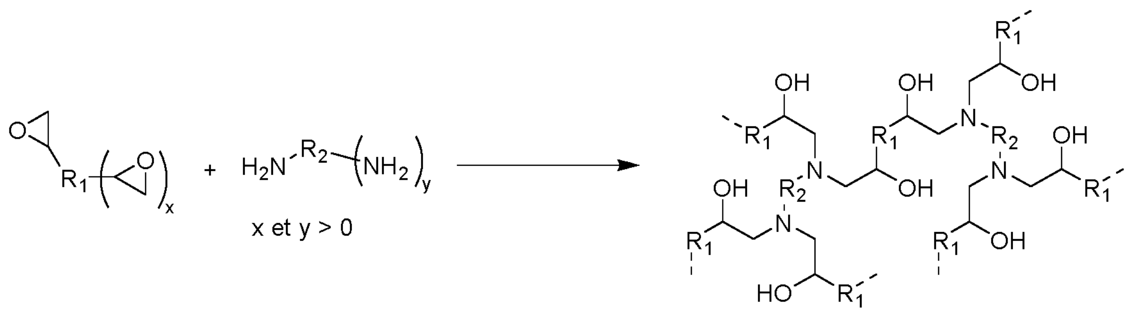


composé (A) composé (B)

dans lequel x varie de 1 à 4 et y varie de 1 à 9, et

$R_1$ et $R_2$ désignent indépendamment l'un de l'autre, une chaîne hydrocarbonée divalente, aliphatique saturée ou insaturée, linéaire ou ramifiée, ou cycloaliphatique ou aromatique, pouvant comporter au moins un hétéroatome tel que O, N et S, et pouvant être substituée.

Les composés (A) comportant deux ou plus de deux groupes époxy et les composés (B) comportant deux ou plus de deux groupes amines pouvant être utilisés, seront décrits plus en détails ci-dessous.

Cette réaction peut être réalisée à une température allant de -20 à 250°C, mieux de 50 à 150 °C, sous une pression atmosphérique.

Cette réaction peut être réalisée en présence d'un catalyseur comme une amine tertiaire telle que la triéthylamine, ou un aminophénol, ou un catalyseur bien connu dans la technique.

Le liant qui comprend un ou plusieurs polyépoxydes résultant du mélange d'un ou de plusieurs composés (A) comportant deux ou plus de deux groupes époxys avec un ou plusieurs composés (B) comportant deux ou plus de deux groupes amines, est présent de préférence en une quantité allant de 5 à 99 % en poids, mieux de 10 à 90 % en poids, et encore mieux de 15 à 50 % en poids par rapport au poids total de la composition.

Le liège ou matériau à base de liège et le liant époxyde sont de préférence présents dans la composition selon

l'invention en un rapport pondéral liège ou matériau à base de liège sur liant époxyde allant de 0,01 à 20, mieux de 0,1 à 10.

En particulier, la composition est exempte de bisphénol A et de ses dérivés, c'est-à-dire qu'elle comprend 0 % en poids de bisphénol A et/ou de ses dérivés par rapport au poids total de la composition.

Par « dérivés de bisphénol A », on entend, par exemple, le diglycidyléther de Bisphénol A (DGEBA) et le diglycidyléther de Bisphénol F (DGEBF) de formules :

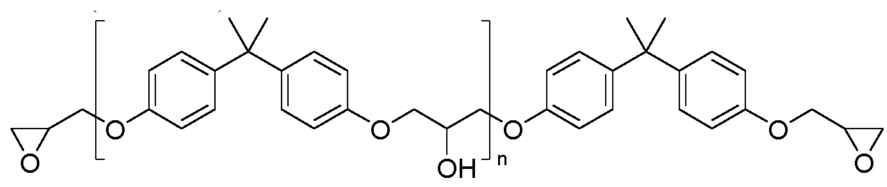

,

et

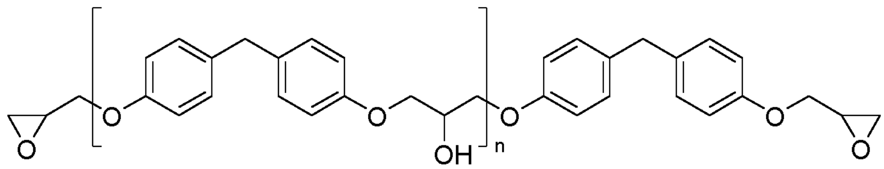

avec n allant de 0 à 1000.

La composition selon l'invention peut comprendre en outre un ou plusieurs additifs de préférence non-fortement toxiques, biosourcés ou non, de préférence biosourcés.

Cet additif ou ces additifs peuvent notamment contribuer à l'homogénéité de la structure. Ils peuvent également présenter des propriétés hydrophobes.

De préférence, le ou les additif(s) est ou sont choisi(s) parmi les homopolymères ou copolymères dont au moins un des monomères est choisi parmi le chlorure ou fluorure de vinylidène, le chlorure de vinyle, le méthacrylonitrile, l'acrylonitrile, le méthacrylate d'alkyle en $C_{1-5}$, comme le méthacrylate de méthyle, le styrène et l'éthylène ; les polymères de cellulose ; les latex (émulsion de particules de polymères) tels que, par exemple, les latex de polyisoprène, d'éthylène/acétate de vinyle, de styrène/acide acrylique, ou de styrène/butadiène ; les huiles de silicones ; les paraffines ; les cires naturelles ; les agents porogènes ; les billes de verre telles que celles vendues par la société Poraver ou celles vendues par la société 3M sous la référence « bubble glass » ; et leurs mélanges.

A titre d'exemples d'homopolymères ou copolymères ayant au moins un monomère particulier, on peut notamment citer l'homopolymère de chlorure de vinylidène, les copolymères chlorure ou fluorure de vinylidène/chlorure de vinyle/acrylonitrile, les copolymères acrylonitrile/méthacrylate de méthyle, les copolymères acrylonitrile/méthacrylate de méthyle/méthacrylonitrile, les copolymères styrène/acrylonitrile, les copolymères styrène/éthylène-butylène/styrène (ou SEBS) et les homopolymères ou copolymères d'éthylène.

Dans un mode de réalisation préféré, les additifs peuvent se trouver sous la forme de structures alvéolaires, et plus particulièrement sous la forme de particules ayant une taille moyenne inférieure à 500 $\mu$m.

Lorsqu'un ou des additifs est ou sont présent(s), leur quantité peut varier de 0,1 à 20 % en poids, mieux de 1 à 10 % en poids par rapport au poids total de la composition.

L'invention est également relative à la composition comprenant :

- du liège ou un matériau à base de liège,
- au moins un composé (A) comportant deux ou plus de deux groupes époxy, non-fortement toxique, et
- au moins un composé (B) comportant deux ou plus de deux groupes amines, non-fortement toxique, et
- éventuellement au moins un additif tel que décrit ci-dessus, de préférence biosourcé.

De préférence, le composé (A) comportant au moins deux groupes époxy peut être préparé à partir d'un polyol comprenant deux ou plus de deux groupes hydroxy, de préférence de 2 à 5 groupes hydroxy et d'épichlorhydrine, d'épibromhydrine ou de glycidol, ou également par la méthode d'allylation et d'oxydation, ces matières premières étant non-fortement toxiques.

L'invention concerne aussi un procédé de préparation de la composition selon l'invention. Il comprend les étapes suivantes :

(i) mélange du liège ou du matériau à base de liège avec au moins un composé (A) comportant deux ou plus de

deux groupes époxy et au moins un composé (B) comportant deux ou plus de deux groupes amines, les composés (A) et (B) étant non-fortement toxiques, à une température allant de 0 à 150°C, de préférence de 10 à 50°C, sous une pression atmosphérique, pendant une durée allant de 5 à 120 minutes, de préférence de 10 à 60 minutes; et (ii) chauffage à une température allant de -20 à 200 °C, de préférence de 50 à 150 °C, sous pression atmosphérique, pendant une durée allant de 15 à 150 minutes, de préférence de 30 à 120 minutes.

Le procédé selon l'invention peut comprendre une étape préalable supplémentaire (io) consistant à préparer le composé (A) comportant au moins deux groupes époxy à partir d'un polyol comprenant deux ou plus de deux groupes hydroxy, de préférence de 2 à 5 groupes hydroxy et d'épichlorhydrine, d'épibromhydrine ou de glycidol, ou également par la méthode d'allylation et d'oxydation.

La réaction à partir d'un alcool et d'épichlorhydrine, d'épibromhydrine ou de glycidol peut se faire à une température allant de -20 à 150 °C, préférentiellement de 0 à 120 °C.

Cette étape (io) pourra se faire juste avant l'étape (i).

Des exemples de polyols comportant deux ou plus de deux groupes hydroxy pouvant être utilisés dans l'invention sont notamment choisis parmi :

- les alcools aromatiques mononucléiques comme :

  ◦ le résorcinol

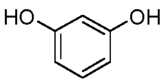

  ◦ l'hydroquinone

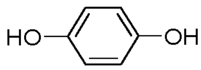

  ◦ la vanilline et ses dérivés

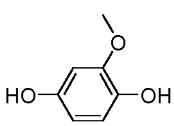 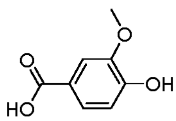 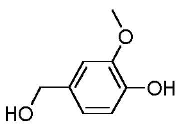

  ◦ le phloroglucinol

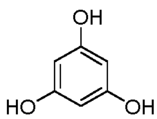

  ◦ le cardanol

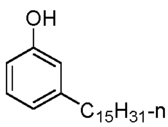 avec n= 0, 2, 4 ou 6

  ◦ les dérivés de la lignine choisis parmi l'alcool p-coumarylique, l'alcool coniférylique et l'alcool sinapylique

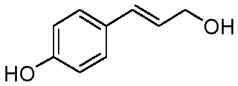 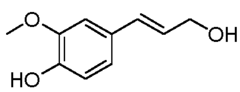 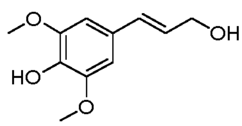

◦ les dérivés de la coumarine

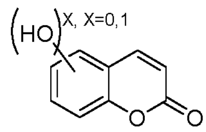

◦ l'acide gallique

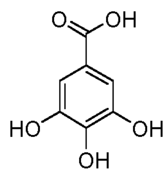

;

- les alcools aromatiques dinucléiques comme :

◦ les dimères de la vanilline

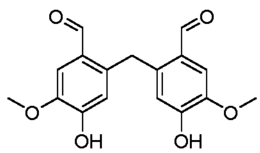

◦ les $\alpha$-$\omega$ diphénols

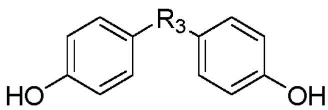

dans laquelle $R_3$ représente une chaîne hydrocarbonée divalente, aliphatique saturée ou insaturée, linéaire ou ramifiée, ou cycloaliphatique ou aromatique, pouvant comporter au moins un hétéroatome tel que O, N et S, et pouvant être substituée, et de préférence représente un groupe alkylène de préférence en $C_{1-20}$, cycloalkylène de préférence en $C_{3-15}$, aromatique de préférence en $C_{6-18}$, pouvant porter des substituants tels qu'alkyle de préférence en $C_{1-5}$comportant éventuellement un ou plusieurs hétéroatomes comme O, N et/ou S ;

- les alcools aromatiques polynucléiques comme :

◦ l'oligo-styrol dont le monomère répond à la formule :

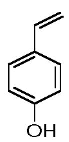

◦ le cardanol phénolé

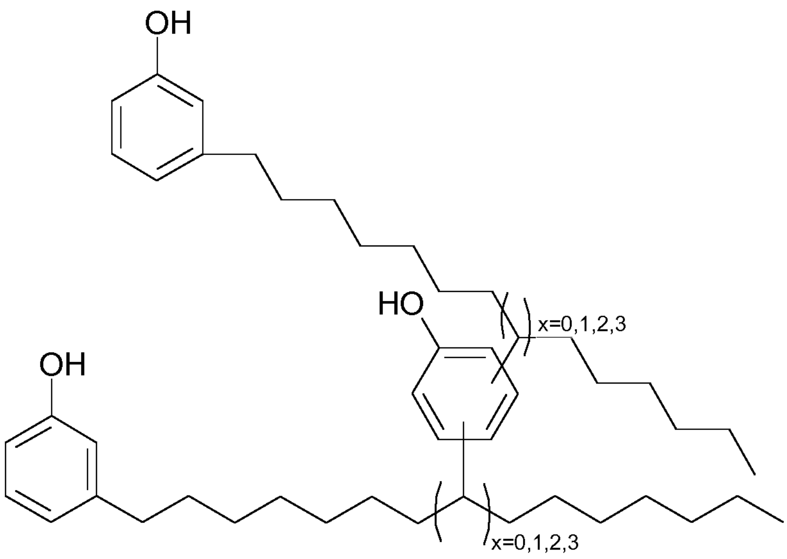

◦ les produits de phénolation des huiles et autres polyènes tels que les polybutadiènes (PB), les polyisoprènes (PI), et le farnésène, tels que ceux de formule :

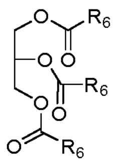

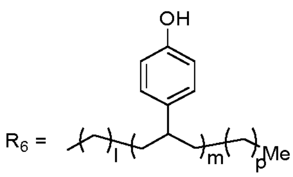

dans laquelle Me désigne le groupe méthyle, 1 est un nombre entier allant de 1 à 10, m est un nombre entier allant de 1 à 3, et p est un nombre entier allant de 1 à 10, sous réserve que l+3m+p=17 ;

- les alcools aliphatiques comme :

◦ les produits obtenus par oxydation des dimères et trimères d'acides gras en $C_{36-54}$, comme :

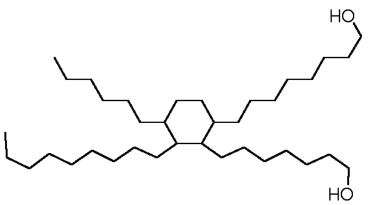

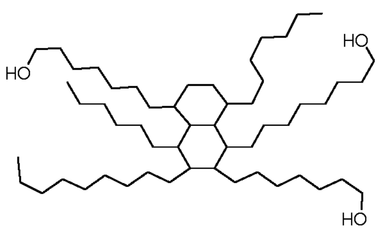

tels que ceux vendus par Croda,

◦ les sucres, (oligo)glycérols et isosorbides de formules :

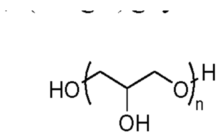

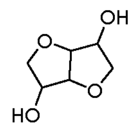

◦ les diols, polyéthylène glycols, polypropylène glycols, polybutylène glycols et les oligobutadiènes hydroxy téléchéliques, tels que ceux de formules :

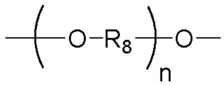

$R_8$ = 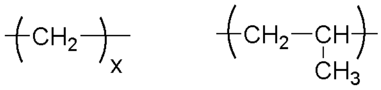

x = 2, 3, 4

avec n allant de 1 à 1000,

◦ les polyesters-diols de formule :

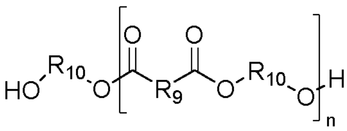

dans laquelle $R_9$ représente un groupe alkylène de préférence en $C_{1-20}$, cycloalkylène de préférence en $C_{3-15}$, aromatique de préférence en $C_{6-18}$, pouvant porter des substituants tels qu'alkyle de préférence en $C_{1-5}$, comportant éventuellement un ou plusieurs hétéroatomes comme O, N et/ou S, et

$R_{10}$ est un diol, polyéthylène glycol, polypropylène glycol, polybutylène glycol ou oligobutadiène hydroxy téléchélique tels que ceux définis ci-dessus,

◦ les polycarbonates-diols de formule :

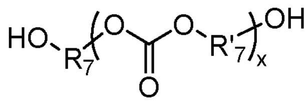

dans laquelle x va de 1 à 1000,

$R_7$ et $R'_7$ représentent chacun, indépendamment l'un de l'autre, un groupe alkylène de préférence en $C_{1-20}$, cycloalkylène de préférence en $C_{3-15}$, aromatique de préférence en $C_{6-18}$, pouvant porter des substituants tels qu'alkyle de préférence en $C_{1-5}$ comportant éventuellement un ou plusieurs hétéroatomes comme O, N et/ou S.

A titre d'exemples de composés (A) contenant deux ou plus de deux groupes époxy, préférés, qui peuvent être commerciaux, on peut notamment citer :

- les dérivés de la vanilline (ou de l'alcool coniférylique) de formules :

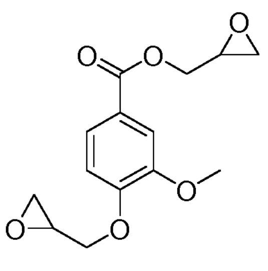 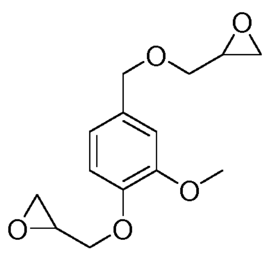 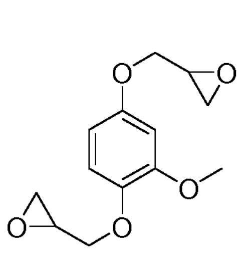 ,

- les dérivés de l'alcool para-coumarylique de formules :

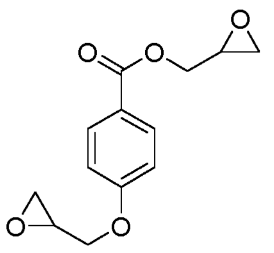 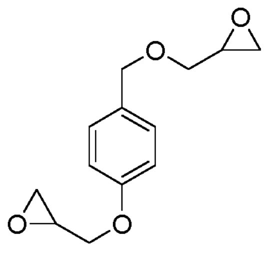 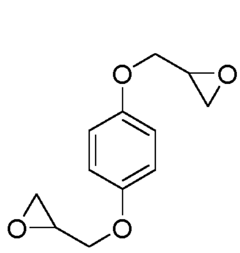 ,

- les dérivés de l'alcool sinapylique de formules :

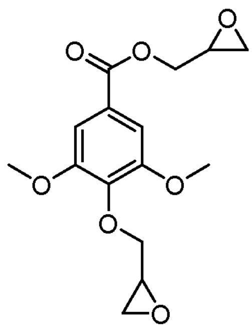 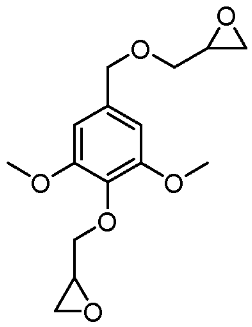 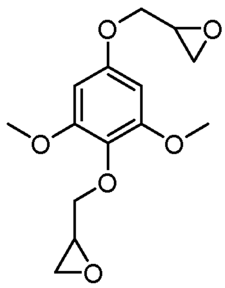 ,

- le dérivé de l'acide gallique de formule :

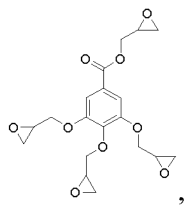 ,

- le phloroglucinol époxydé

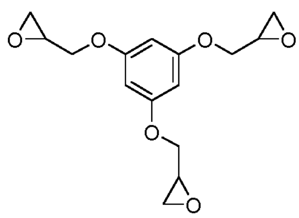 ,

- le cardanol polyépoxydé de formule :

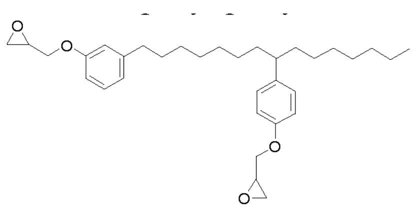 ,

tel que celui vendu sous la dénomination commerciale NC-514 par la société Cardolite,

- le diglycidyléther de polypropylène glycol

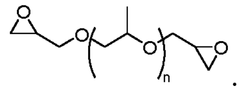

avec n entre 1 et 1000,
tel que celui vendu sous la référence DER® 732P par la société DOW,

- les huiles époxydées et leurs dérivés acides ou esters gras époxydés telles que les huiles de soja époxydées, plus particulièrement celles de formule :

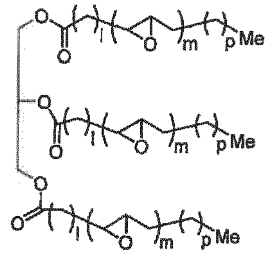

dans laquelle Me désigne le groupe méthyle, 1 est un nombre entier allant de 1 à 10, m est un nombre entier allant de 1 à 3, et p est un nombre entier allant de 1 à 10, sous réserve que l+3m+p=17. A titre d'exemple de telles huiles, on peut notamment citer celle vendue sous la marque « Vikoflex » par la société Arkema ; et

- les tanins de thé époxydés et la catéchine époxydée.

Les composés (B) utilisés dans l'invention comportent deux ou plus de deux groupes amines, de préférence de deux à dix, mieux encore de 2 à 5. Ils peuvent être aromatiques ou aliphatiques.

Les composés (B) comportant deux ou plus de deux groupes amines peuvent être obtenus par une première allylation d'alcools aliphatiques ou aromatiques tels que décrits ci-dessus, ou de crotonisation ou de méthallylation, suivie d'une réaction de thiol-ène sur les doubles liaisons avec un thiol aminé, par exemple, la cystéamine chlorhydratée, en présence d'un amorceur thermique ou photochimique.

L'amorceur thermique peut être de type azoïque comme l'azobisisobutyronitrile (AIBN).

A titre d'exemple d'amorceur photochimique, on peut citer le 2-hydroxy-2-méthyl-1-phényl-propan-1-one telle que celle vendue sous la dénomination commerciale Darocur 1173 ou le bis(2,4,6-triméthylbenzoyl)-phénylphosphine oxide tel que celui vendu sous la dénomination commerciale Irgacure 819.

Les composés (B) comportant deux ou plus de deux groupes amines utilisés dans l'invention, sont choisis parmi :

- les dérivés d'huiles de formule :

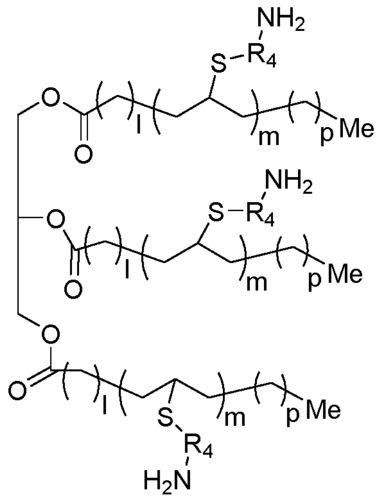

dans laquelle $R_4$ désigne un groupe alkylène en $C_{1-5}$, linéaire ou ramifié, tel que méthylène et éthylène, Me désigne le groupe méthyle, 1 est un nombre entier allant de 1 à 10, m est un nombre entier allant de 1 à 3, et p est un nombre entier allant de 1 à 10, sous réserve que l+3m+p=17 ;

- les dérivés du polybutadiène portant des groupements $-S-R_4-NH_2$, $R_4$ désignant un groupe alkylène en $C_{1-5}$, linéaire ou ramifié, tel que méthylène et éthylène ;
- les dérivés de l'allylamine de formule :

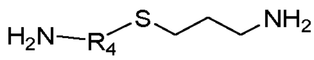

$R_4$ désignant un groupe alkylène en $C_{1-5}$, linéaire ou ramifié, tel que méthylène et éthylène ;
- les dérivés du triméthylolpropane de formule :

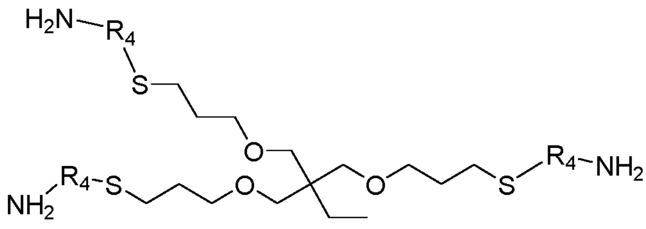

$R_4$ désignant un groupe alkylène en $C_{1-5}$, linéaire ou ramifié, tel que méthylène et éthylène ;
- les dérivés du pentaérythritol de formule :

$$\left(HO-CH_2\right)_x C \left(CH_2-O-C_3H_6-S-R_4-NH_2\right)_{4-x}$$

avec $0 \leq x \leq 2$, et
$R_4$ désignant un groupe alkylène en $C_{1-5}$, linéaire ou ramifié, tel que méthylène et éthylène ;
- les dérivés de cardanol de formules (I) et (II) :

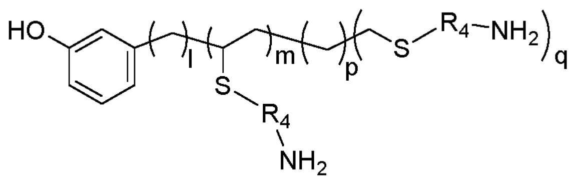

(I)

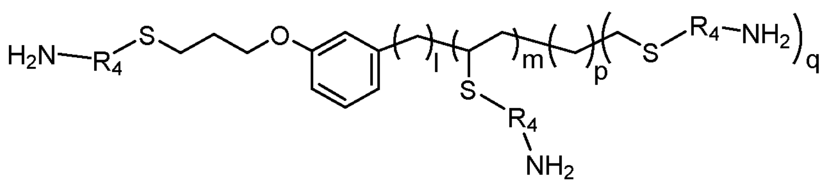

(II)

dans lesquelles $R_4$ désigne un groupe alkylène en $C_{1-5}$, linéaire ou ramifié, tel que méthylène et éthylène, 1 est un nombre entier allant de 1 à 10, m est un nombre entier allant de 1 à 3, p est un nombre entier allant de 0 à 10, et q va de 0 à 1 ;
- les dérivés de vanilline (ou de l'alcool coniférylique) de formules :

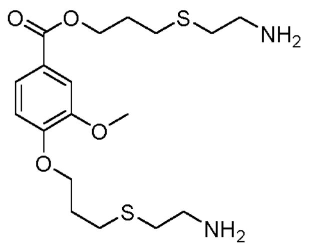 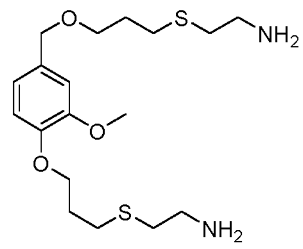 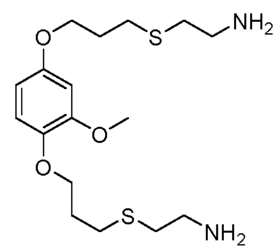 ;

- les dérivés de l'alcool paracoumarylique de formules :

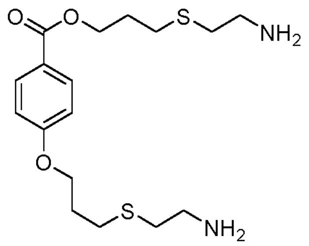 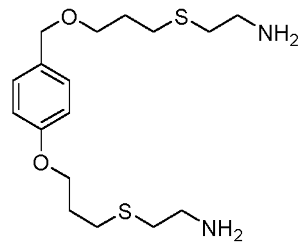 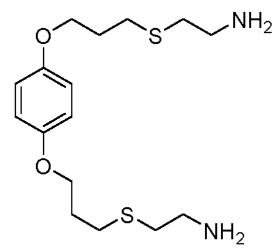 ;

- les dérivés de l'alcool sinapylique de formules :

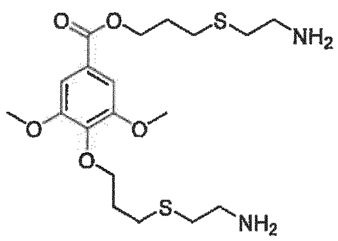 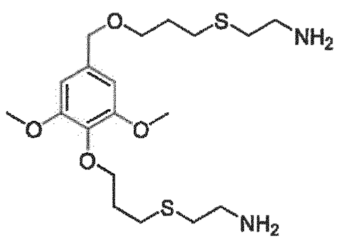 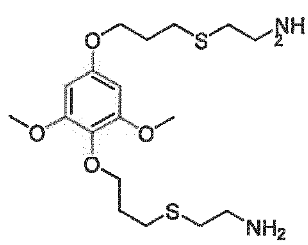 ;

- le dérivé d'acide gallique de formule :

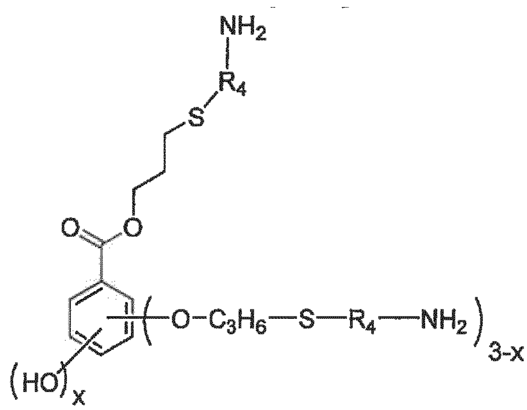

avec $0 \leq x \leq 2$, et

$R_4$ désignant un groupe alkylène en $C_{1-5}$, linéaire ou ramifié, tel que méthylène et éthylène ;

- les dérivés de tanins, tels que la catéchine de formule :

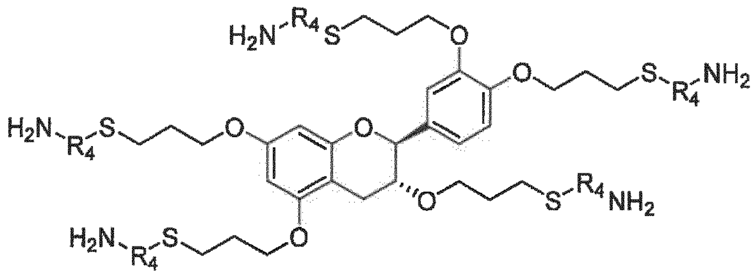

.

$R_4$ désignant un groupe alkylène en $C_{1-5}$, linéaire ou ramifié, tel que méthylène et éthylène ;

- une phénalkamine de formule :

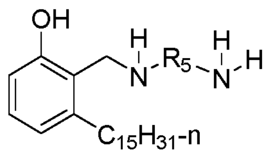

n = 0, 2, 4 ou 6

$R_5$:

$$\left( CH_2-CH_2-NH \right)_x CH_2-CH_2-$$

x compris entre 0 et 5

$$\left( CH_2 \right)_y$$

y compris entre 2 et 12

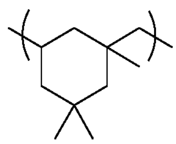

telle que, par exemple, celle vendue sous la dénomination commerciale NX-5454 par la société Cardolite ;

- le dérivé du furane de formule :

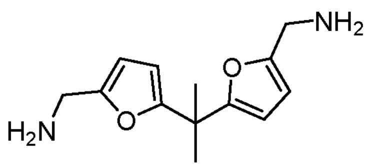

;

- la polylysine ;
- le chitosan et ses oligomères dérivés ;
- les dimères et trimères d'acide gras modifiés en amines et amidoamines comme ceux vendus par la société Croda, de formules :

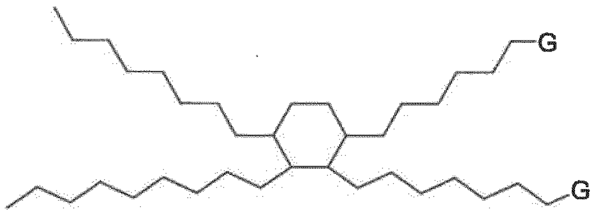

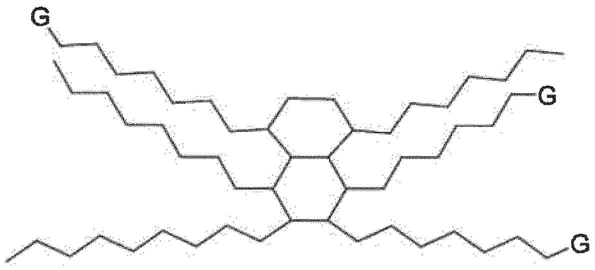

G = $NH_2$;

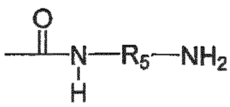

et $R_5$ étant défini comme ci-dessus ;

- les polyéther amines telles que celle vendue sous la dénomination commerciale Jeffamine par la société Huntsman

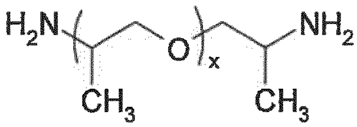

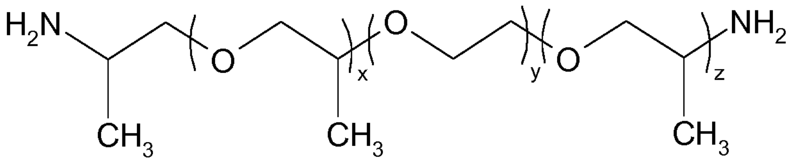

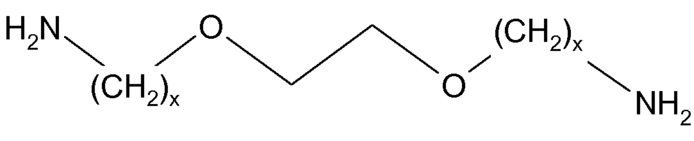

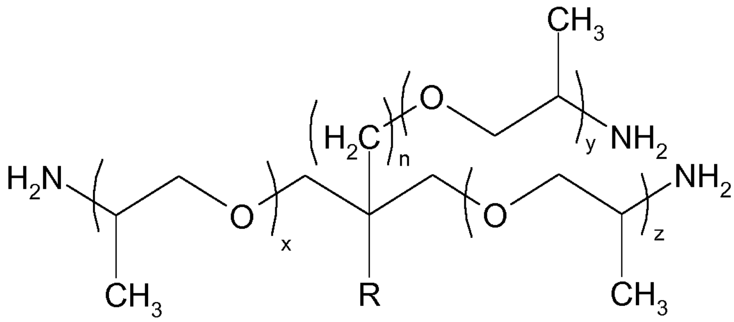

avec x, y, z et n allant de 1 à 1000 ; et

- les diamines de formule :

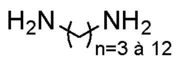 .

Les composés (B) comportant deux ou plus de deux groupes amines préférés sont notamment choisis parmi :

- les dérivés de cardanol de formules (I) et (II) :

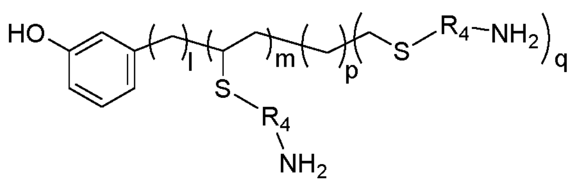

(I)

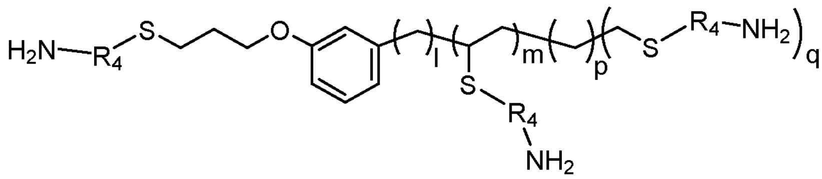

(II)

dans lesquelles $R_4$ désigne un groupe alkylène en $C_{1-5}$, linéaire ou ramifié, tel que méthylène et éthylène, 1 est un nombre entier allant de 1 à 10, m est un nombre entier allant de 1 à 3, p est un nombre entier allant de 0 à 10, et q va de 0 à 1 ;

- les phénalkamines vendues par la société Cardolite, de formule :

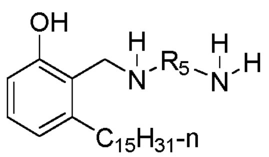

n=0, 2, 4 ou 6

$R_5$:

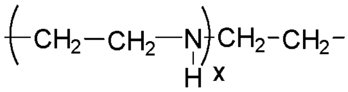

x compris entre 0 et 5

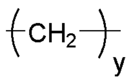

y compris entre 2 et 12

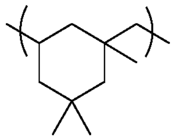

;

- les dimères et trimères d'acide gras modifiés en amines et amidoamines comme ceux vendus par la société Croda, de formules :

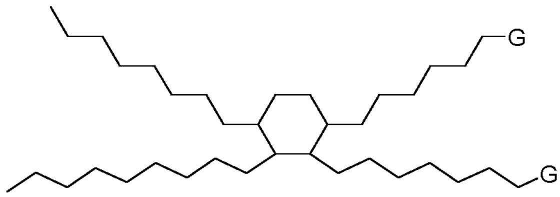

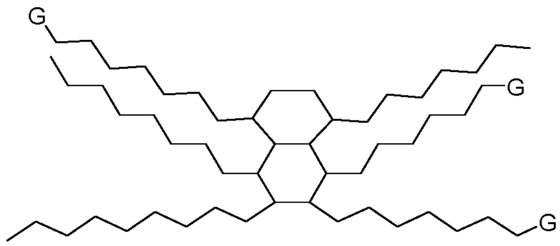

G = $NH_2$ ;

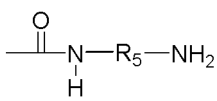

$R_5$ défini comme précédemment ; et

- la polypropylène glycol diamine ou triamine telle que celle vendue sous la dénomination commerciale Jeffamine comme Jeffamine D400 ou la Jeffamine T403 par la société Huntsman, représentée par les formules :

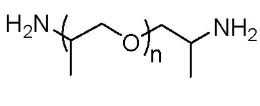

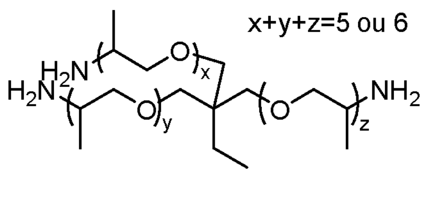

x+y+z=5 ou 6

.

Un objet de l'invention concerne la composition susceptible d'être obtenue par le procédé tel que décrit ci-dessus.

L'invention a encore pour objet un procédé de fabrication de bouchons mettant en oeuvre une composition selon l'invention.

Par exemple, la composition selon l'invention peut être utilisée dans la fabrication d'un bouchon technique tel que le « 1+1 », le « 2+2 », le « 0+2 » et le « 0+1 », ou de bouchons agglomérés ou microagglomérés.

Par« 1+1 », on entend un bouchon dont le corps est constitué de granulés de liège aggloméré avec une colle qui sera dans le cadre de l'invention au moins un polyépoxyde décrit ci-dessus, tandis que les deux extrémités sont

composées chacune d'une rondelle en liège naturel, lesdites rondelles étant obtenues par tubage d'un morceau de liège dont l'épaisseur correspond à celle des rondelles. Le tubage consiste à prélever un morceau de liège au moyen d'un emporte-pièce.

Le bouchon « 2+2 » est constitué d'une partie agglomérée et avec 2 rondelles aux extrémités, tandis que les bouchons « 0+2 » pour le champagne ou les bouchons « 0+1 » pour les effervescents ne comprennent pas de rondelle à une extrémité et 2 ou 1 rondelle(s) à l'autre extrémité, respectivement.

La composition selon l'invention peut par exemple être utilisée dans le procédé de fabrication des bouchons tel que décrit dans la demande FR 2 672 002.

Un autre objet encore est un bouchon susceptible d'être obtenu par le procédé de fabrication.

Le bouchon obtenu à partir d'une composition selon l'invention présente des propriétés physiques au moins équivalentes, voire même supérieures à celles d'un bouchon en liège naturel et à celle des bouchons contenant au moins une partie de liège aggloméré à base de liant. Les propriétés d'un tel bouchon se caractérisent par l'absence d'absorption de l'eau caractérisée par la mesure de l'imbibition ainsi que les propriétés mécaniques du bouchon.

La mesure d'imbibition est faite en immergeant des bouchons dans de l'eau bouillante pendant 15 min. La mesure d'imbibition doit être inférieure à 20%, préférentiellement à 18% et encore mieux inférieure à 15%.

Les propriétés mécaniques sont caractérisées par la force de compression pour le comprimer ou par la force que le bouchon renvoie sur le goulot de la bouteille communément appelé le retour élastique.

A titre indicatif, les bouchons de diamètre compris entre 26 et 31 mm sont caractérisés par la mesure de pression de compression. Cette mesure se fait en comprimant un bouchon à l'aide d'un piston qui se déplace à la vitesse de 10mm/min, à un diamètre compris entre 15 et 16 mm. La valeur de compression est ramenée à la surface cylindrique du bouchon. Celle-ci doit être comprise entre 15 et 60 $N/cm^2$ et préférentiellement entre 25 et 60 $N/cm^2$ selon les diamètres des bouchons.

A titre indicatif, les bouchons de diamètre compris entre 20 et 25 mm sont caractérisés par la mesure de la force de retour exercée par le bouchon après que le bouchon ait été comprimé à un diamètre de 15 à 16 mm, puis revenu à un diamètre de 18 à 21 mm et été maintenu pendant 3 minutes. La force obtenue est ramenée à la surface cylindrique du bouchon pour obtenir le retour élastique. Celle -ci doit être comprise pour les bouchons vin tranquille (diamètre de l'ordre de 24 mm) entre 0,8 et 5 $N/cm^2$, mieux allant de 1,5 à 4,5 N et préférentiellement 2 à 4 N.

L'invention a encore pour objet l'utilisation d'un polyépoxyde obtenu à partir d'au moins un composé (A) comportant au moins deux groupes époxy et d'au moins un composé (B) comportant au moins deux groupes amines tels que décrits ci-dessus, comme liant du liège ou d'un matériau à base de liège.

Les exemples suivants sont donnés à titre purement illustratif de la présente invention.

EXEMPLES

Exemple 1 : Préparation de liants polyépoxydes.

On a préparé des liants polyépoxydes à partir des ingrédients suivants indiqués dans le tableau 1 ci-dessous :

Tableau 1

| Liant | Composé (A) | Composé (B) | Agent réticulant |
|---|---|---|---|
| I | Cardanol polyépoxydé | Phénalkamine | triglycidyl éther de triméthylolpropane |
| II | Cardanol polyépoxydé | Polypropylène glycol diamine | triglycidyl éther de triméthylolpropane |

On a utilisé des mélanges d'un composé (A) comportant au moins deux groupes époxy et d'un composé (B) comportant au moins deux groupes amines tels qu'indiqués dans le tableau 1, avec 0, 10, 20 ou 30% en poids d'agent réticulant par rapport au poids du composé (A).

Les proportions sont variables suivant les composés utilisés et satisfont à la formule suivante :

$$\text{poids(amine)} = \text{AHEW/EEW*poids (époxy)}$$

dans laquelle :

AHEW est le poids d'équivalent hydrogène aminé (Amine Hydrogen Equivalent Weight) et
EEW est le poids d'équivalent époxy (Epoxy Equivalent Weight).

On a caractérisé ensuite les liants sans farine de liège en utilisant les méthodes indiquées ci-dessous.

Des analyses thermique et mécanique ont été réalisées sur les liants polyépoxydes obtenus. Pour l'analyse thermogravimétrique, une dizaine de milligramme de liant a été testée dynamiquement sous azote à 10°C/min. Pour la mesure de transition vitreuse, une analyse calorimétrique différentielle à balayage (DSC) a été réalisée avec un programme dynamique à 20°C/min sous flux d'azote. Pour les analyses mécaniques, une déformation a été appliquée à l'échantillon à 3°C/min sous 1Hz. Les résultats sont les suivants :

- une température de perte massique de 5% entre 240°C et 300°C ;
- une température de transition vitreuse comprise entre -40°C et 40°C ;
- une température de transition mécanique comprise également entre -40°C et 40°C ;
- un module élastique compris entre 1 et 4MPa ;
- un module vitreux compris entre 1500MPa et 2500MPa ; et
- une densité de réticulation comprise entre 200 et 500 mol/$m^3$.

Exemple 2

On a fabriqué un bouchon selon un procédé de moulage à partir de farine de liège et de liant époxyde.

On a compacté un mélange de 70 % en poids, par rapport au poids du mélange, de farine de liège présentant une granulométrie allant de 0,25 à 1,5 mm, et de 30 % en poids, par rapport au poids du mélange, d'un liant époxy préparé dans l'exemple 1, dans un tube qui a été fermé et mis dans une étuve à une température de 120°C.

Le temps de moulage est adapté suivant la réactivité du liant époxyde et peut varier de 30 minutes à 2 heures.

En particulier, le temps de moulage est de 1,5 heure dans ces exemples.

Des bouchons compacts et ne s'effritant pas au démoulage ont été obtenus.

On a ensuite caractérisé les bouchons obtenus avec les différents liants avec les méthodes décrites plus haut.

Les résultats sont regroupés dans le tableau 2 ci-dessous.

Tableau 2

| Liant | Quantité d'agent réticulant (% en poids) | Masse volumique bouchon (g/$dm^3$) | % Imbibition | Pression compression (N/$cm^2$) |
|---|---|---|---|---|
| I | 10 % | 330 | 11% | 54 |
| I | 20 % | 330 | 12% | 53 |
| I | 30 % | 330 | 11% | 56 |
| II | 0 % | 325 | 11% | 43 |

Exemple 3

On a fabriqué des bouchons de la même manière que dans l'exemple 2, à l'exception près que l'on a utilisé 50 % en poids du mélange, de liant polyépoxyde préparé dans l'exemple 1.

Les conditions de moulage sont les mêmes.

Des bouchons compacts et ne s'effritant pas au démoulage ont été obtenus.

On a ensuite caractérisé les composites obtenus avec les différents liants.

On a mesuré la masse volumique de chaque bouchon, le taux d'imbibition, la force de compression selon les protocoles mentionnés dans l'exemple 2.

Les résultats sont regroupés dans le tableau 3 ci-dessous.

Tableau 3

| Liant | Quantité d'agent réticulant (% en poids) | Masse volumique bouchon (g/$dm^3$) | % Imbibition | Pression compression (N/$cm^2$) |
|---|---|---|---|---|
| I | 0 % | 330 | 13% | 32 |
| I | 30 % | 330 | 12% | 49 |
| II | 0 % | 330 | 11% | 40 |

Exemple 4

Dans cet exemple, on a utilisé un liant III préparé à partir de diglycidyléther de polypropylène glycol et d'une phénalkamine, avec 30 % en poids de triglycidyléther de triméthylolpropane comme agent réticulant, par rapport au poids du diglycidyléther de polypropylène glycol, et un additif alvéolaire d'origine synthétique.
On a mélangé 64 % en poids, par rapport au poids du mélange, de farine de liège présentant une granulométrie allant de 0,5 à 3 mm, 30 % en poids, par rapport au poids du mélange, du liant III préparé dans l'exemple 1 et 6 % de l'additif.
On a fabriqué des bouchons de la même manière que dans l'exemple 2, à l'exception des tubes dans lesquels le mélange a été mis. On a utilisé une machine ayant des moules contenant plusieurs tubes. Ceux-ci ont été remplis avec le mélange puis fermés après compression et le moule a été mis dans une première étuve à 200 °C pendant 30 minutes puis à 80°C pendant 20 minutes.
Des bouchons compacts et ne s'effritant pas au démoulage ont été obtenus.
On a ensuite caractérisé les composites obtenus avec le liant.
Les résultats sont regroupés dans le tableau 4 ci-dessous.

Tableau 4

| Masse volumique bouchon (g/dm$^3$) | % Imbibition | Pression compression (N/cm$^2$) |
|---|---|---|
| 252 | 9,18% | 36 |

## Revendications

1. Composition comprenant du liège ou un matériau à base de liège et un liant qui comprend un ou plusieurs polyépoxydes résultant du mélange d'un ou de plusieurs composés (A) comportant deux ou plus de deux groupes époxys avec un ou plusieurs composés (B) comportant deux ou plus de deux groupes amines, les composés (A) et (B) n'étant pas des molécules classées cancérigènes-mutagènes-reprotoxiques (ou CMR), classes 1A, 1B et 2, dans laquelle les composés (B) comportant deux ou plus de deux groupes amines sont choisis parmi :

   - les dérivés d'huiles de formule :

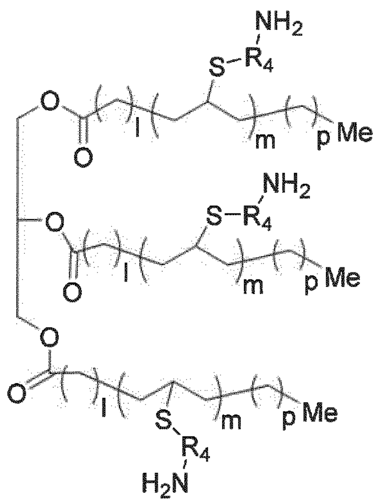

   dans laquelle $R_4$ désigne un groupe alkylène en $C_{1-5}$, linéaire ou ramifié, tel que méthylène et éthylène, Me désigne le groupe méthyle, 1 est un nombre entier allant de 1 à 10, m est un nombre entier allant de 1 à 3, et p est un nombre entier allant de 1 à 10, sous réserve que 1+3m+p=17 ;
   - les dérivés du polybutadiène portant des groupements $-S-R_4-NH_2$, $R_4$ désignant un groupe alkylène en $C_{1-5}$, linéaire ou ramifié, tel que méthylène et éthylène ;
   - les dérivés de l'allylamine de formule :

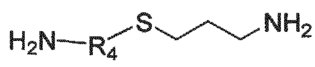

$R_4$ désignant un groupe alkylène en $C_{1-5}$, linéaire ou ramifié, tel que méthylène et éthylène ;
- les dérivés du triméthylolpropane de formule :

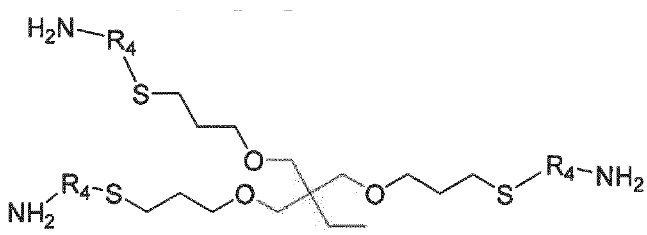

$R_4$ désignant un groupe alkylène en $C_{1-5}$, linéaire ou ramifié, tel que méthylène et éthylène ;
- les dérivés du pentaérythritol de formule :

$$\left(HO-CH_2\right)_x C \left(CH_2-O-C_3H_6-S-R_4-NH_2\right)_{4-x}$$

avec avec $0 \leq x \leq 2$, et
$R_4$ désignant un groupe alkylène en $C_{1-5}$, linéaire ou ramifié, tel que méthylène et éthylène ;
- les dérivés de cardanol de formules (I) et (II) :

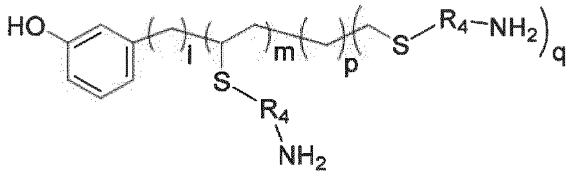

(I)

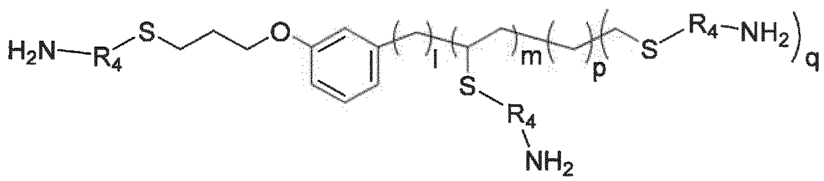

(II)

dans lesquelles $R_4$ désigne un groupe alkylène en $C_{1-5}$, linéaire ou ramifié, tel que méthylène et éthylène, 1 est un nombre entier allant de 1 à 10, m est un nombre entier allant de 1 à 3, p est un nombre entier allant de 0 à 10, et q va de 0 à 1 ;
- les dérivés de vanilline (ou de l'alcool coniférylique) de formules :

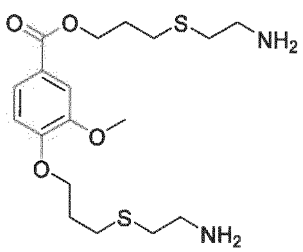 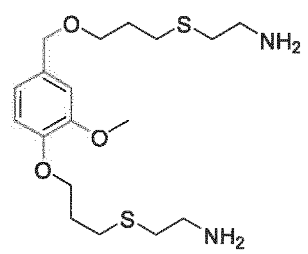 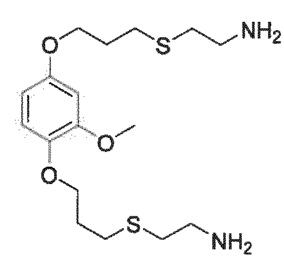 ;

- les dérivés de l'alcool paracoumarylique de formules :

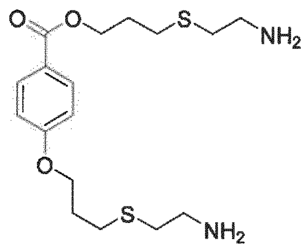 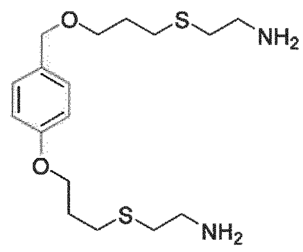 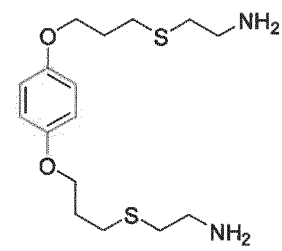 ;

- les dérivés de l'alcool sinapylique de formules :

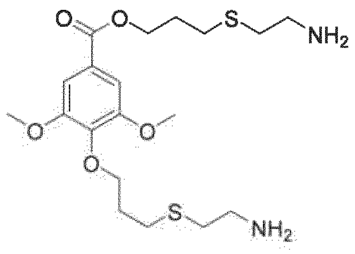 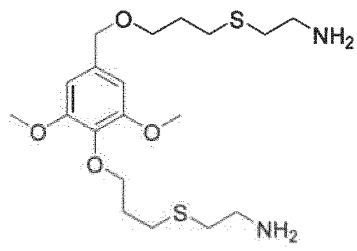 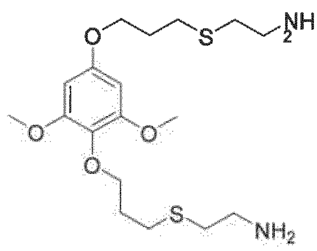 ;

- le dérivé d'acide gallique de formule :

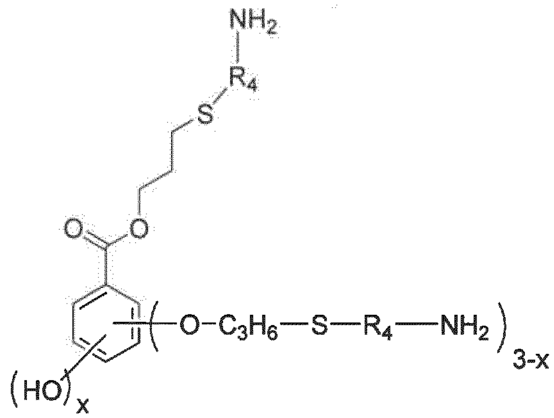

avec $0 \leq x \leq 2$, et
$R_4$ désignant un groupe alkylène en $C_{1-5}$, linéaire ou ramifié, tel que méthylène et éthylène ;
- les dérivés de tanins, tels que la catéchine de formule :

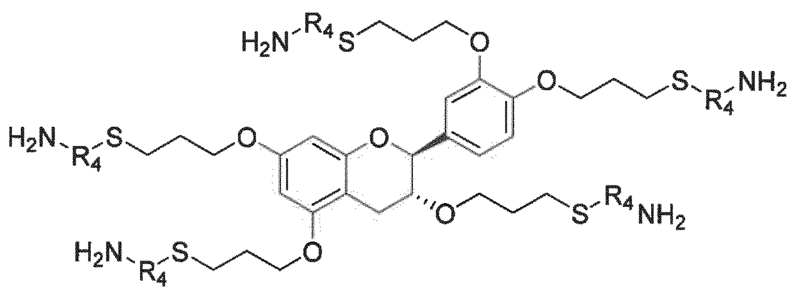

$R_4$ désignant un groupe alkylène en $C_{1-5}$, linéaire ou ramifié, tel que méthylène et éthylène ;
- une phénalkamine de formule :

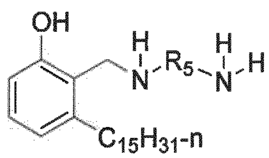

n= 0, 2, 4 ou 6

$R_5$:

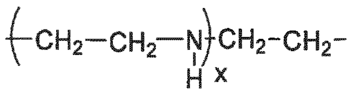

x compris entre 0 et 5

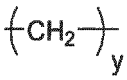

y compris entre 2 et 12

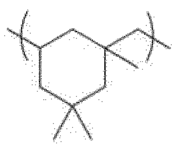

;

- le dérivé du furane de formule :

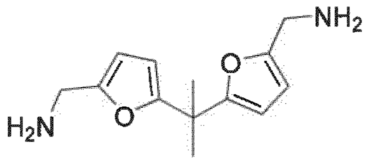

;

- la polylysine ;
- les dérivés du chitosan et leurs oligomères ;
- les dimères et trimères d'acide gras modifiés en amines et amidoamines de formules :

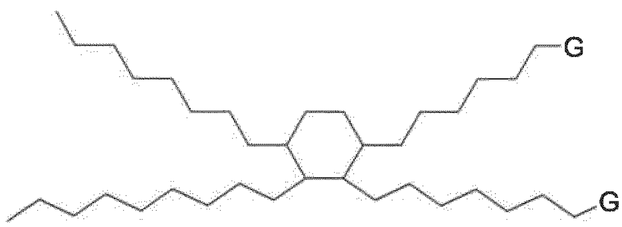

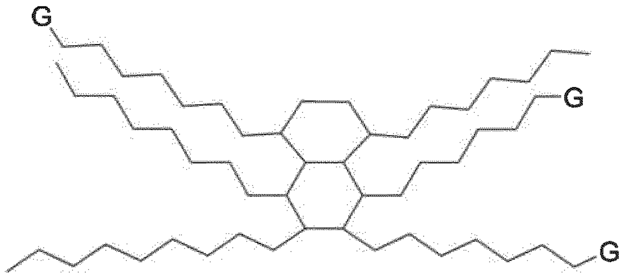

G = $NH_2$;

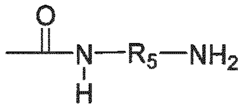

et

$R_5$ désignant $-(CH_2-CH_2-NH)_x-CH_2-CH_2-$ avec x compris entre 0 et 5, $-(CH_2)_y-$ avec y compris entre 2 et 12, ou

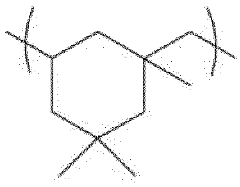

;

- les polyéther-amines

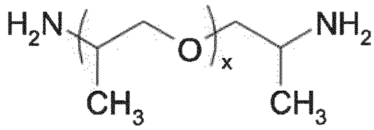

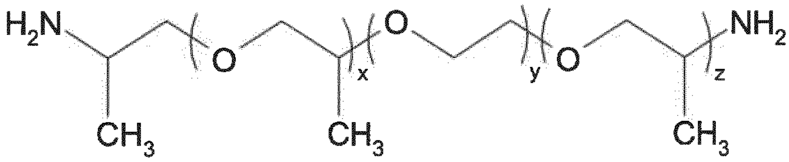

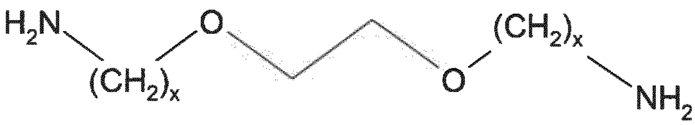

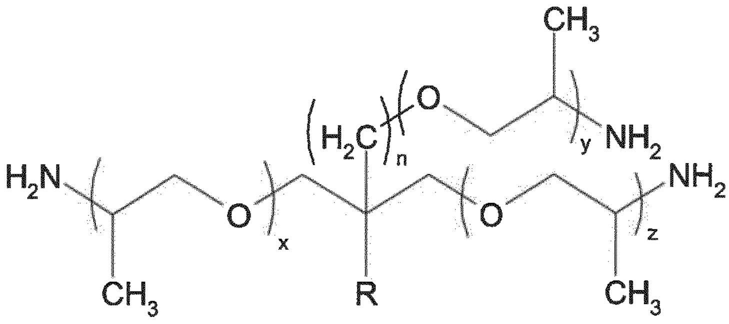

avec x, y, z et n allant de 1 à 1000 ; et

- les diamines de formule :

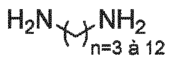.

2. Composition selon la revendication 1, **caractérisée en ce qu'**elle contient de 1 à 95 % en poids, de préférence de 10 à 90 % en poids, de liège ou un matériau à base de liège, par rapport au poids total de la composition.

3. Composition selon l'une quelconque des revendications précédentes, **caractérisée en ce qu'**elle contient de 5 à 99 % en poids, de préférence de 10 à 90 % en poids, de liant qui comprend un ou plusieurs polyépoxydes, par rapport au poids total de la composition.

4. Composition selon l'une quelconque des revendications précédentes, **caractérisée en ce que** le rapport pondéral liège ou matériau à base de liège sur liant qui comprend un ou plusieurs polyépoxydes va de 0,01 à 20, mieux de 0,1 à 10.

5. Composition selon l'une quelconque des revendications précédentes, **caractérisée en ce qu'**elle est exempte de bisphénol A et de ses dérivés.

6. Composition selon l'une quelconque des revendications précédentes, **caractérisée en ce que** le composé (A) comportant au moins deux groupes époxy est préparé à partir d'un polyol comprenant deux ou plus de deux groupes hydroxy, et d'épichlorhydrine, d'épibromhydrine ou de glycidol, ou par la méthode d'allylation et d'oxydation.

7. Composition selon l'une quelconque des revendications précédentes, **caractérisée en ce qu'**elle comprend un ou plusieurs additifs, de préférence biosourcés.

8. Composition selon la revendication 7, **caractérisée en ce que** le ou les additif(s) est ou sont choisi(s) parmi les homopolymères ou copolymères dont au moins un des monomères est choisi parmi le chlorure ou fluorure de vinylidène, le chlorure de vinyle, le métacrylonitrile, l'acrylonitrile, le méthacrylate d'alkyle en $C_{1-5}$, le styrène et l'éthylène ; les polymères de cellulose ; les latex ; les huiles de silicones ; les paraffines ; les cires naturelles ; les agents porogènes ; les billes de verre et leurs mélanges.

9. Composition selon la revendication 7 ou 8, **caractérisée en ce que** le ou les additif(s) est ou sont présent (s) en une quantité allant de 0,1 à 20 % en poids, mieux de 1 à 10 % % en poids par rapport au poids total de la composition.

10. Composition selon la revendication 6, **caractérisé en ce que** les polyols sont choisis parmi les alcools aromatiques mononucléiques, les alcools aromatiques dinucléiques, les alcools aromatiques polynucléiques et les alcools aliphatiques.

11. Composition selon l'une quelconque des revendications 1 à 5 et 7 à 9, **caractérisé en ce que** les composés (A) contenant deux ou plus de deux groupes époxy sont choisis parmi :

- les dérivés de la vanilline (ou de l'alcool coniférylique) de formules :

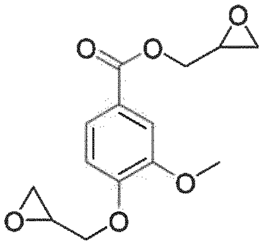 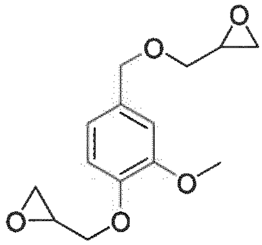 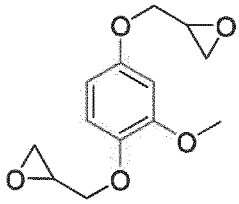 ,

- les dérivés de l’alcool paracoumarylique de formules :

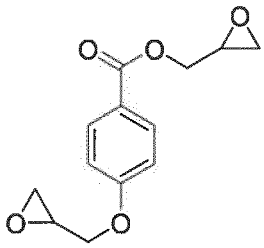 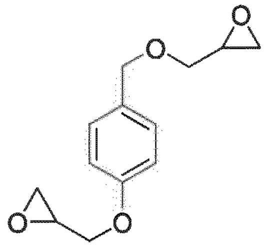 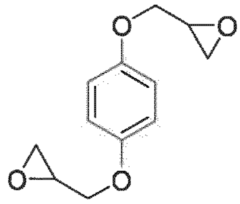 ,

- les dérivés de l’alcool sinapylique de formules :

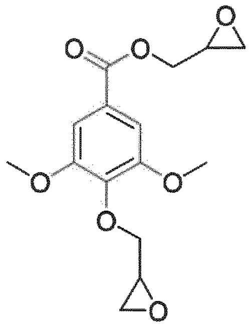 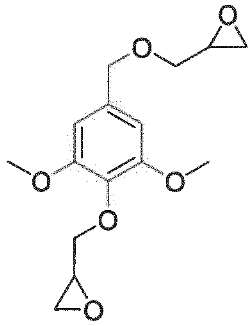 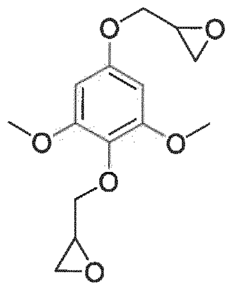 ,

- le dérivé de l’acide gallique de formule :

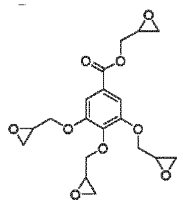 ,

- le phloroglucinol époxydé

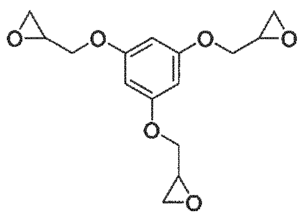 ,

- le cardanol polyépoxydé de formule :

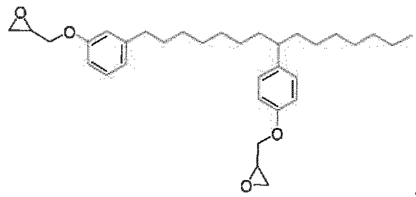

,

- le diglycidyléther de polypropylène glycol

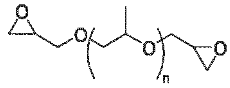

.

avec n entre 1 et 1000,
- les huiles époxydées et leurs dérivés acides ou esters gras époxydés et
- les tanins de thé époxydés et la catéchine époxydée.

**12.** Procédé de préparation de la composition selon l'une quelconque des revendications précédentes, **caractérisé en ce qu'**il comprend les étapes suivantes :

(i) mélange du liège ou du matériau à base de liège avec au moins un composé (A) comportant deux ou plus de deux groupes époxy et au moins un composé (B) comportant deux ou plus de deux groupes aminés tel que défini dans la revendication 1, les composés (A) et (B) n'étant pas des molécules classées cancérigènes-mutagènes-reprotoxiques (ou CMR), classes 1A, 1B et 2, à une température allant de 0 à 150 °C, de préférence de 10 à 50°C, sous une pression atmosphérique, pendant une durée allant de 5 à 120 minutes, et
(ii) chauffage à une température allant de -20 à 200 °C, de préférence de 50 à 150 °C, sous pression atmosphérique, pendant une durée allant de 15 à 150 minutes.

**13.** Procédé selon la revendication 12, **caractérisé en ce qu'**il comprend une étape préalable supplémentaire ($i_0$) consistant à préparer le composé (A) comportant au moins deux groupes époxy à partir d'un polyol comprenant deux ou plus de deux groupes hydroxy, et d'épichlorhydrine, d'épibromhydrine ou de glycidol, ou par la méthode d'allylation et d'oxydation.

**14.** Composition **caractérisée en ce qu'**elle est susceptible d'être obtenue par le procédé selon l'une quelconque des revendications 12 à 13.

**15.** Procédé de fabrication d'un bouchon comprenant le procédé de préparation de la composition, selon l'une quelconque des revendications 12 à 13.

**16.** Utilisation des polyépoxydes résultant du mélange d'un ou de plusieurs composés (A) comportant deux ou plus de deux groupes époxy avec un ou plusieurs composés (B) comportant deux ou plus de deux groupes amines, tels que définis dans la revendication 1, comme liant du liège ou d'un matériau à base de liège, les composés (A) et (B) n'étant pas des molécules classées cancérigènes-mutagènes-reprotoxiques (ou CMR), classes 1A, 1B et 2.

## Patentansprüche

**1.** Zusammensetzung, umfassend Kork oder ein Material auf Basis von Kork und ein Bindemittel, das ein oder mehrere Polyepoxide umfasst, die sich aus dem Mischen einer oder mehrerer Verbindungen (A) mit zwei oder mehr als zwei Epoxidgruppen mit einer oder mehreren Verbindungen (B) mit zwei oder mehr als zwei Amingruppen ergeben, wobei es sich bei den Verbindungen (A) und (B) nicht um als krebserzeugend, mutagen oder reproduktionstoxisch (oder KMR), Klassen 1A, 1B und 2, klassifizierte Moleküle handelt, wobei die Verbindungen (B) mit zwei oder mehr als zwei Amingruppen ausgewählt sind aus:

- Ölderivaten der Formel:

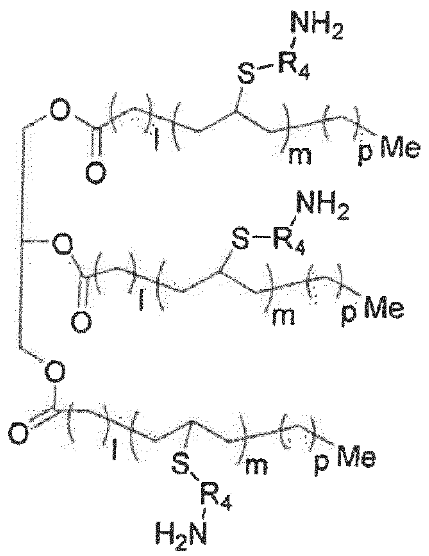

worin $R_4$ für eine lineare oder verzweigte $C_{1-5}$-Alkylengruppe, wie Methylen und Ethylen, steht, Me für die Methylgruppe steht, 1 eine ganze Zahl im Bereich von 1 bis 10 ist, m eine ganze Zahl im Bereich von 1 bis 3 ist und p eine ganze Zahl im Bereich von 1 bis 10 ist, mit der Maßgabe, dass 1 + 3m + p = 17;

- Polybutadienderivaten mit $-S-R_4-NH_2$-Gruppen, wobei $R_4$ für eine lineare oder verzweigte $C_{1-5}$-Alkylengruppe, wie Methylen und Ethylen, steht;
- Allylaminderivaten der Formel:

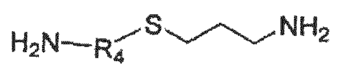

wobei $R_4$ für eine lineare oder verzweigte $C_{1-5}$-Alkylengruppe, wie Methylen und Ethylen, steht;

- Trimethylolpropanderivaten der Formel:

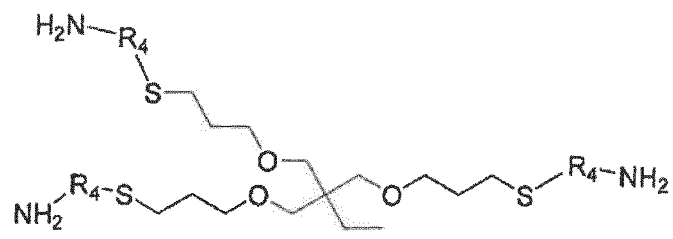

wobei $R_4$ für eine lineare oder verzweigte $C_{1-5}$-Alkylengruppe, wie Methylen und Ethylen, steht;

- Pentaerythritolderivaten der Formel:

$$\left( HO-CH_2 \right)_x C \left( CH_2-O-C_3H_6-S-R_4-NH_2 \right)_{4-x}$$

mit $0 \leq x \leq 2$ und

wobei $R_4$ für eine lineare oder verzweigte $C_{1-5}$-Alkylengruppe, wie Methylen und Ethylen, steht;

- Cardanolderivaten der Formeln (I) und (II):

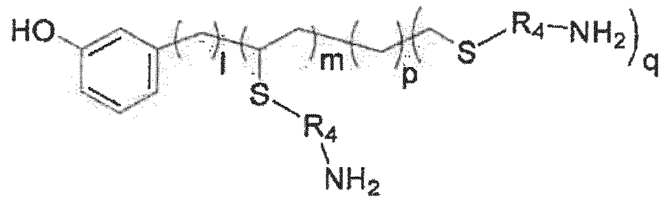

(I)

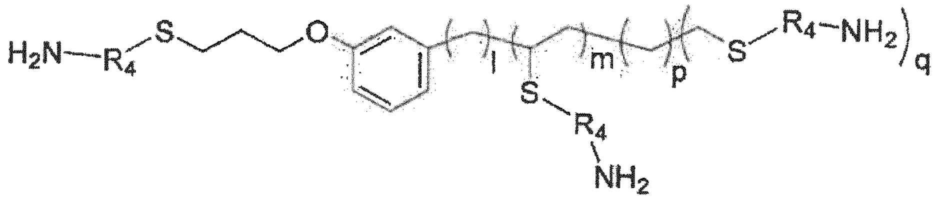

(II)

wobei $R_4$ für eine lineare oder verzweigte $C_{1-5}$-Alkylengruppe, wie Methylen und Ethylen, steht, 1 eine ganze Zahl im Bereich von 1 bis 10 ist, m eine ganze Zahl im Bereich von 1 bis 3 ist, p eine ganze Zahl im Bereich von 0 bis 10 ist und q 0 bis 1 beträgt;

- Vanillinderivaten (oder Coniferylalkoholderivaten) der Formeln:

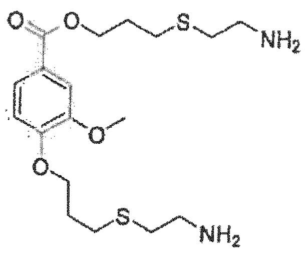

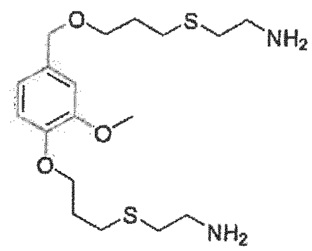

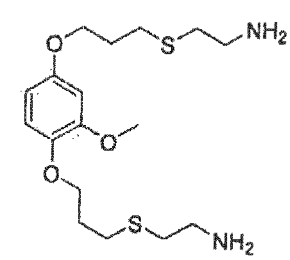

;

- para-Cumarylalkoholderivaten der Formeln:

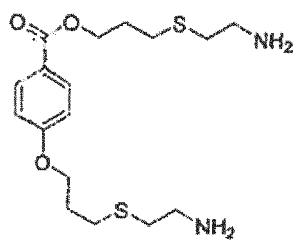

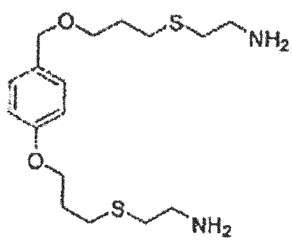

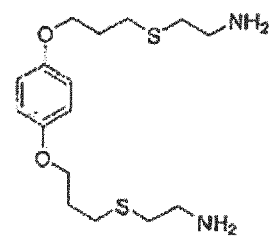

;

- Sinapylalkoholderivaten der Formeln:

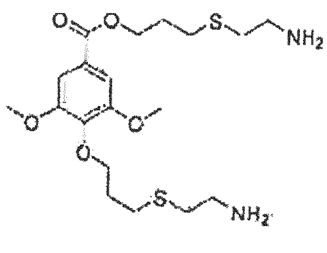

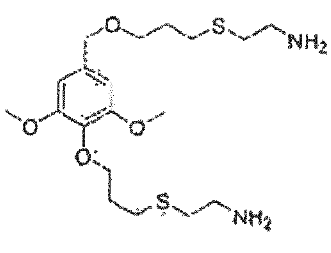

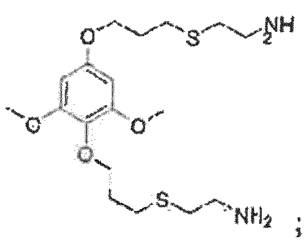

;

- dem Gallussäurederivat der Formel:

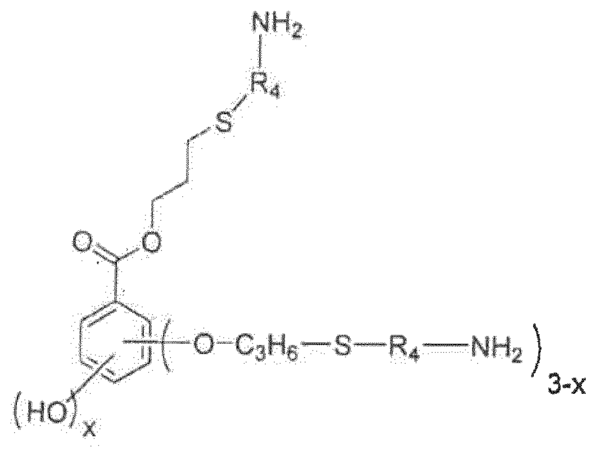

mit $0 \leq x \leq 2$ und
wobei $R_4$ für eine lineare oder verzweigte $C_{1-5}$-Alkylengruppe, wie Methylen und Ethylen, steht;

- Tanninderivaten, wie dem Catechin der Formel:

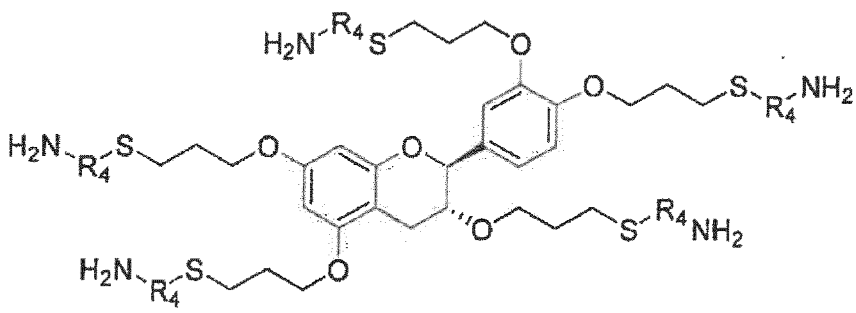

wobei $R_4$ für eine lineare oder verzweigte $C_{1-5}$-Alkylengruppe, wie Methylen und Ethylen, steht;
- einem Phenalkamin der Formel:

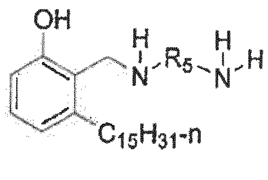

n = 0, 2, 4 oder 6
$R_5$ :

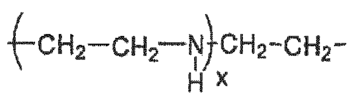

x zwischen 0 und 5

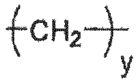

y zwischen 2 und 12

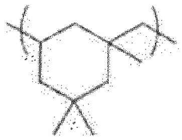

;

- dem Furanderivat der Formel:

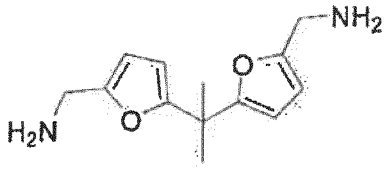

;

- Polylysin;
- Chitosanderivaten und Oligomeren davon;
- amin- und amidoaminmodifizierten Fettsäuredimeren und -trimeren der Formeln:

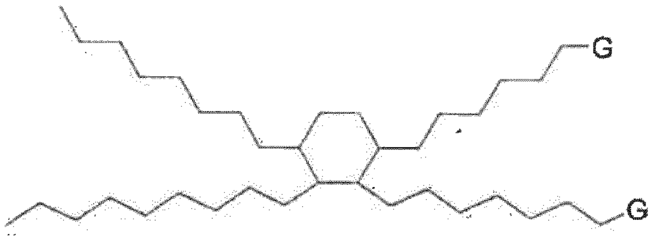

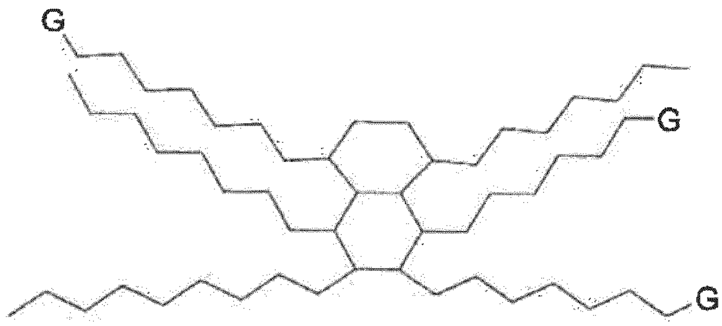

G = $NH_2$;

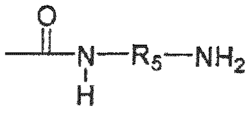

und

wobei $R_5$ für $-(CH_2-CH_2-NH)_x-CH_2-CH_2$ mit x zwischen 0 und 5, $-(CH_2)_y-$ mit y zwischen 2 und 12 oder

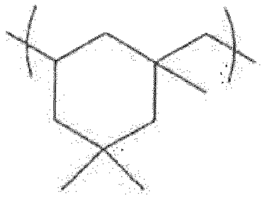

steht;
- den Polyetheraminen

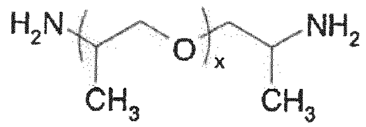

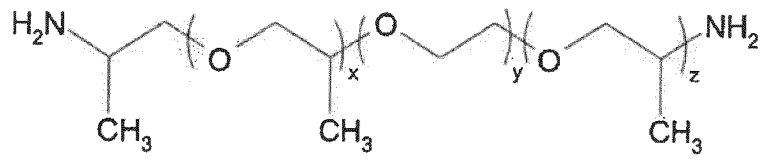

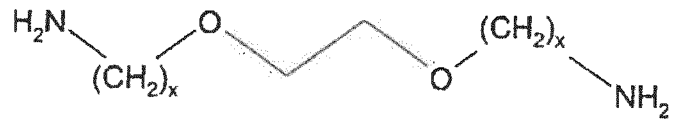

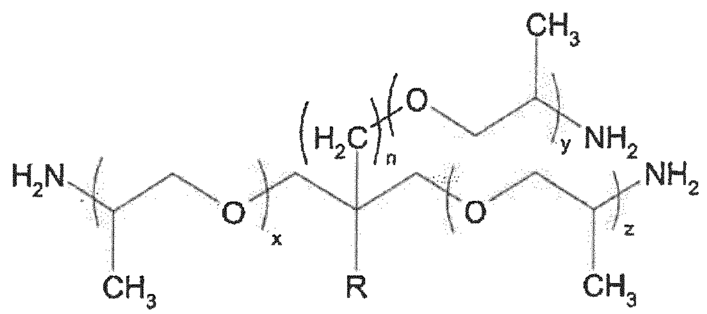

wobei x, y, z und n im Bereich von 1 bis 1000 liegen; und
- den Diaminen der Formel:

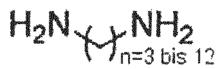

2. Zusammensetzung nach Anspruch 1, **dadurch gekennzeichnet, dass** sie 1 bis 95 Gew.-%, vorzugsweise 10 bis 90 Gew.-%, von Kork oder einem Material auf Basis von Kork, bezogen auf das Gesamtgewicht der Zusammensetzung, enthält.

3. Zusammensetzung nach einem der vorhergehenden Ansprüche, **dadurch gekennzeichnet, dass** sie 5 bis 99 Gew.-%, vorzugsweise 10 bis 90 Gew.-%, von Bindemittel, das ein oder mehrere Polyepoxide umfasst, bezogen auf das Gesamtgewicht der Zusammensetzung, enthält.

4. Zusammensetzung nach einem der vorhergehenden Ansprüche, **dadurch gekennzeichnet, dass** das Gewichtsverhältnis von Kork oder Material auf Basis von Kork zu Bindemittel, das ein oder mehrere Polyepoxide umfasst, im Bereich von 0,01 bis 20 und noch besser von 0,1 bis 10 liegt.

5. Zusammensetzung nach einem der vorhergehenden Ansprüche, **dadurch gekennzeichnet, dass** sie frei von Bisphenol A und dessen Derivaten ist.

6. Zusammensetzung nach einem der vorhergehenden Ansprüche, **dadurch gekennzeichnet, dass** die Verbindung (A) mit mindestens zwei Epoxidgruppen aus einem Polyol mit zwei oder mehr als zwei Hydroxygruppen und Epichlorhydrin, Epibromhydrin oder Glycidol oder durch die Methode der Allylierung und Oxidation hergestellt wird.

7. Zusammensetzung nach einem der vorhergehenden Ansprüche, **dadurch gekennzeichnet, dass** sie ein oder

mehrere Additive, die vorzugsweise aus biologischen Quellen stammen, umfasst.

**8.** Zusammensetzung nach Anspruch 7, **dadurch gekennzeichnet, dass** das Additiv bzw. die Additive aus Homopolymeren oder Copolymeren, wobei mindestens eines der Monomere davon aus Vinylidenchlorid oder -fluorid, Vinylchlorid, Methacrylnitril, Acrylnitril, $C_{1-5}$-Alkylmethacrylat, Styrol und Ethylen ausgewählt ist; Cellulosepolymeren; Latizes; Silikonölen; Paraffinen; natürlichen Wachsen; Porenbildnern; Glaskugeln und Mischungen davon ausgewählt ist bzw. sind.

**9.** Zusammensetzung nach Anspruch 7 oder 8, **dadurch gekennzeichnet, dass** das Additiv bzw. die Additive in einer Menge im Bereich von 0,1 bis 20 Gew.-% und noch besser 1 bis 10 Gew.-%, bezogen auf das Gesamtgewicht der Zusammensetzung, vorliegt bzw. vorliegen.

**10.** Zusammensetzung nach Anspruch 6, **dadurch gekennzeichnet, dass** die Polyole aus einkernigen aromatischen Alkoholen, zweikernigen aromatischen Alkoholen, mehrkernigen aromatischen Alkoholen und aliphatischen Alkoholen ausgewählt sind.

**11.** Zusammensetzung nach einem der Ansprüche 1 bis 5 und 7 bis 9, **dadurch gekennzeichnet, dass** die Verbindungen (A) mit zwei oder mehr als zwei Epoxidgruppen aus:

- Vanillinderivaten (oder Coniferylalkoholderivaten) der Formeln:

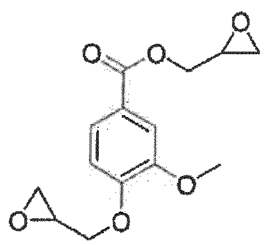 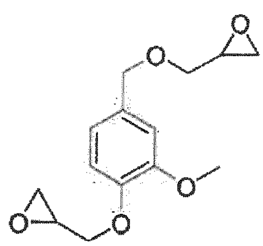 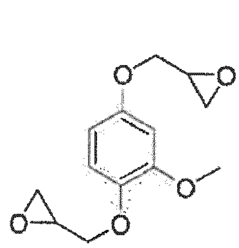 ,

- para-Cumarylalkoholderivaten der Formeln:

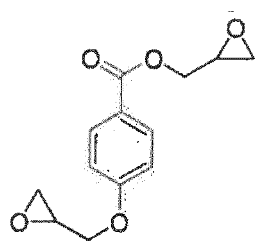 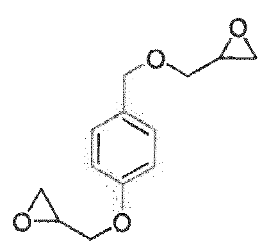 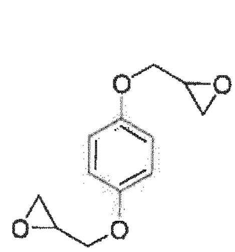 ,

- Sinapylalkoholderivaten der Formeln:

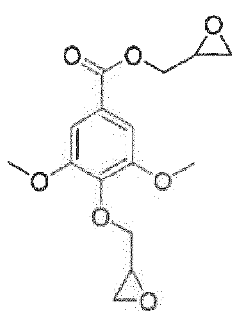 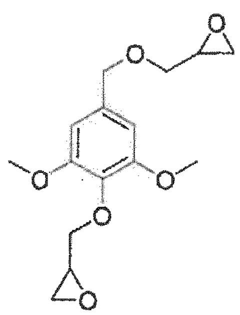 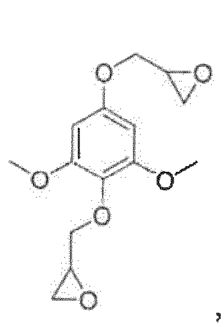 ,

- dem Gallussäurederivat der Formel:

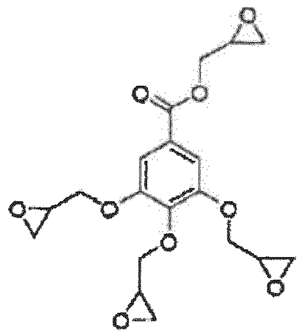

,

- epoxidiertem Phloroglucinol

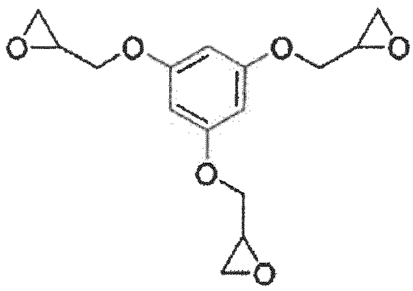

,

- polyepoxidiertem Cardanol der Formel:

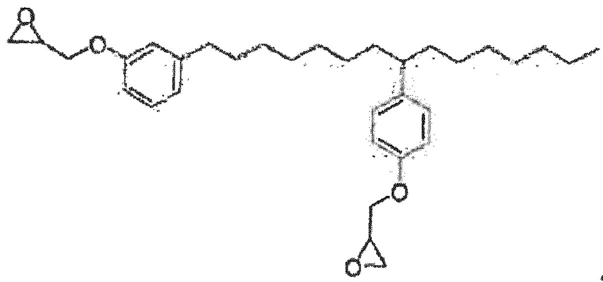

,

- Polypropylenglykoldiglycidylether

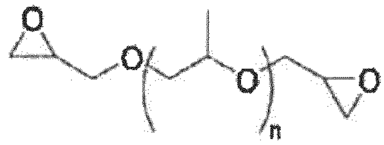

mit n zwischen 1 und 1000,
- epoxidierten Ölen und epoxidierten Fettsäureester- oder Säurederivaten davon und
- epoxidierten Tee-Tanninen und epoxidiertem Catechin

ausgewählt sind.

**12.** Verfahren zur Herstellung der Zusammensetzung nach einem der vorhergehenden Ansprüche, **dadurch gekennzeichnet, dass** es die folgenden Schritte umfasst:

(i) Mischen von Kork oder Material auf Basis von Kork mit mindestens einer Verbindung (A) mit zwei oder mehr als zwei Epoxidgruppen und mindestens einer Verbindung (B) mit zwei oder mehr als zwei Amingruppen gemäß Anspruch 1, wobei es sich bei den Verbindungen (A) und (B) nicht um als krebserzeugend, mutagen oder

reproduktionstoxisch (oder KMR), Klassen 1A, 1B und 2, klassifizierte Moleküle handelt, bei einer Temperatur im Bereich von 0 bis 150 °C, vorzugsweise von 10 bis 50 °C, unter Normaldruck über einen Zeitraum im Bereich von 5 bis 120 Minuten und

(ii) Erhitzen auf eine Temperatur im Bereich von -20 bis 200 °C, vorzugsweise von 50 bis 150 °C, unter Normaldruck über einen Zeitraum im Bereich von 15 bis 150 Minuten.

**13.** Verfahren nach Anspruch 12, **dadurch gekennzeichnet, dass** es einen zusätzlichen vorgeschalteten Schritt (io) umfasst, der aus der Herstellung der Verbindung (A) mit mindestens zwei Epoxidgruppen aus einem Polyol mit zwei oder mehr als zwei Hydroxygruppen und Epichlorhydrin, Epibromhydrin oder Glycidol oder durch die Methode der Allylierung und Oxidation besteht.

**14.** Zusammensetzung, **dadurch gekennzeichnet, dass** sie durch das Verfahren nach einem der Ansprüche 12 bis 13 erhältlich ist.

**15.** Verfahren zur Herstellung eines Korkens, umfassend das Verfahren zur Herstellung der Zusammensetzung nach einem der Ansprüche 12 bis 13.

**16.** Verwendung von Polyepoxiden, die sich aus dem Mischen einer oder mehrerer Verbindungen (A) mit zwei oder mehr als zwei Epoxidgruppen mit einer oder mehreren Verbindungen (B) mit zwei oder mehr als zwei Amingruppen gemäß Anspruch 1 ergeben, als Bindemittel für Kork oder ein Material auf Basis von Kork, wobei es sich bei den Verbindungen (A) und (B) nicht um als krebserzeugend, mutagen oder reproduktionstoxisch (oder KMR), Klassen 1A, 1B und 2, klassifizierte Moleküle handelt.

## Claims

**1.** Composition comprising cork or a cork-based material and a binder which comprises one or more polyepoxides resulting from the mixing of one or more compounds (A) including two or more than two epoxy groups with one or more compounds (B) including two or more than two amine groups, compounds (A) and (B) not being molecules classified as carcinogenic-mutagenic-reprotoxic (or CMR), classes 1A, 1B and 2, in which compounds (B) including two or more than two amine groups are chosen from:

- the oil derivatives of formula:

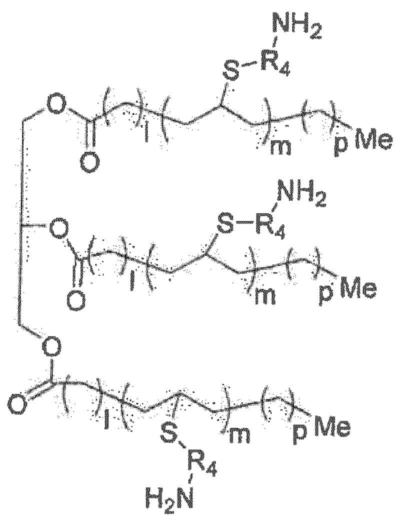

in which $R_4$ denotes a linear or branched $C_{1-5}$ alkylene group, such as methylene or ethylene, Me denotes a methyl group, 1 is an integer ranging from 1 to 10, m is an integer ranging from 1 to 3, and p is an integer ranging from 1 to 10, with the proviso that 1 + 3m + p = 17;

- polybutadiene derivatives bearing groups $-S-R_4-NH_2$, $R_4$ denoting a linear or branched $C_{1-5}$ alkylene group, such as methylene or ethylene;

- the allylamine derivatives of formula:

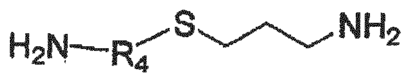

$R_4$ denoting a linear or branched $C_{1-5}$ alkylene group, such as methylene or ethylene;
- the trimethylolpropane derivatives of formula:

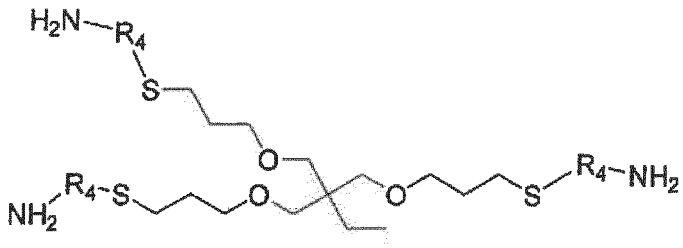

$R_4$ denoting a linear or branched $C_{1-5}$ alkylene group, such as methylene or ethylene;
- the pentaerythritol derivatives of formula:

$$\left( HO-CH_2 \right)_x C \left( CH_2-O-C_3H_6-S-R_4-NH_2 \right)_{4-x}$$

with $0 \leq x \leq 2$, and
$R_4$ denoting a linear or branched $C_{1-5}$ alkylene group, such as methylene or ethylene;
- the cardanol derivatives of formulae (I) and (II):

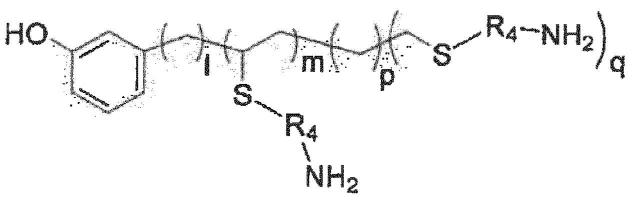

(I)

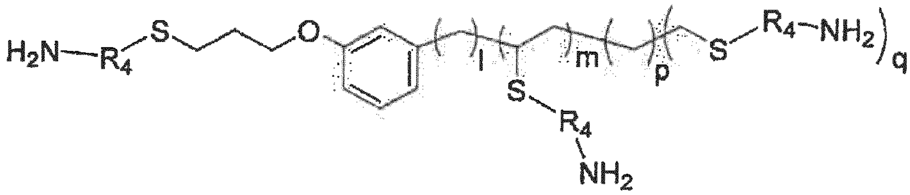

(II)

in which $R_4$ denotes a linear or branched $C_{1-5}$ alkylene group, such as methylene or ethylene, 1 is an integer ranging from 1 to 10, m is an integer ranging from 1 to 3, p is an integer ranging from 0 to 10, and q ranges from 0 to 1;
- the vanillin (or coniferyl alcohol) derivatives of formulae:

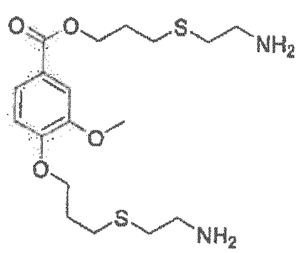 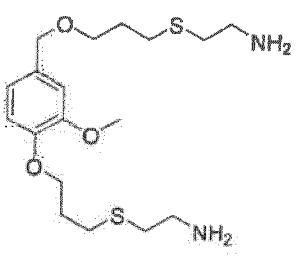 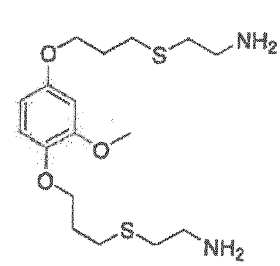 ;

- the para-coumaryl alcohol derivatives of formulae:

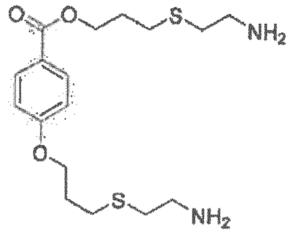
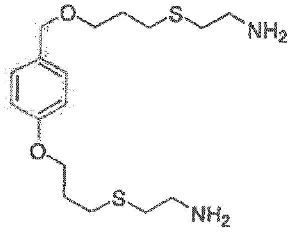
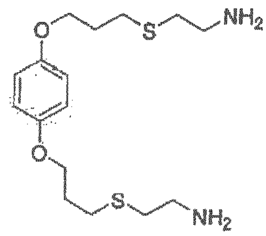
;

- the sinapyl alcohol derivatives of formulae:

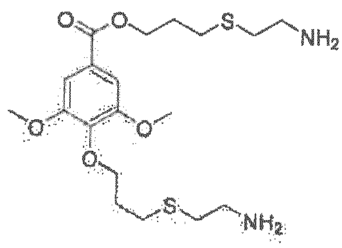
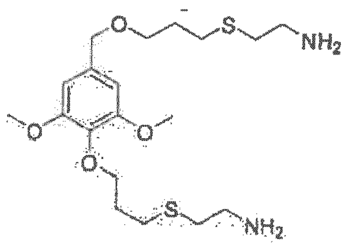
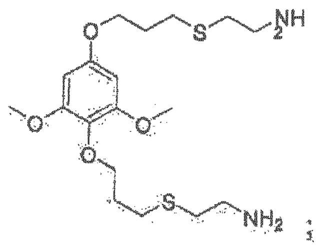
;

- the gallic acid derivative of formula:

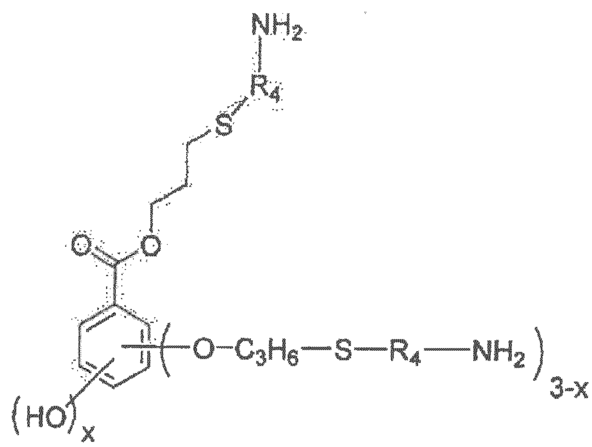

with $0 \leq x \leq 2$, and
$R_4$ denoting a linear or branched $C_{1-5}$ alkylene group, such as methylene or ethylene;
- the tannin derivatives, such as catechin, of formula:

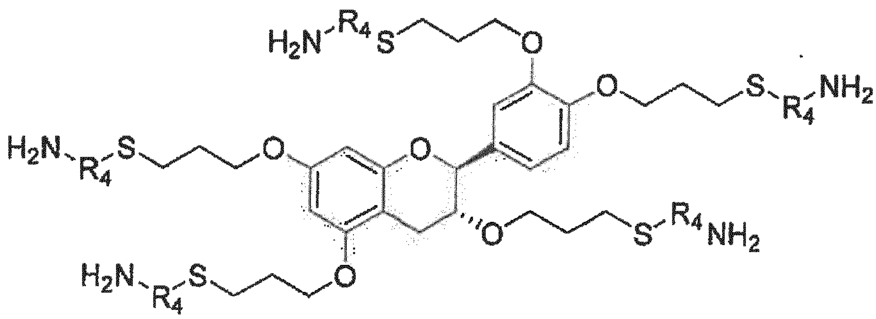

$R_4$ denoting a linear or branched $C_{1-5}$ alkylene group, such as methylene or ethylene;

- a phenalkamine of formula:

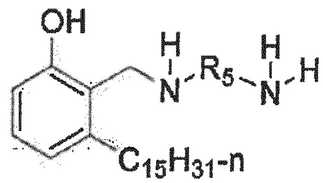

n = 0, 2, 4 or 6
$R_5$:

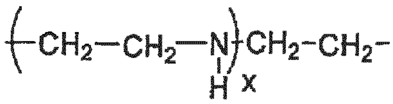

x between 0 and 5

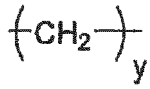

y between 2 and 12

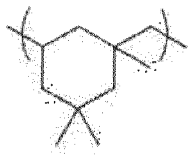

- the furan derivative of formula:

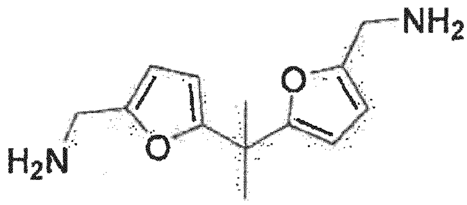

;

- polylysine;
- chitosan derivatives and oligomers thereof;
- the amine-modified and amidoamine-modified fatty acid dimers and trimers of formulae:

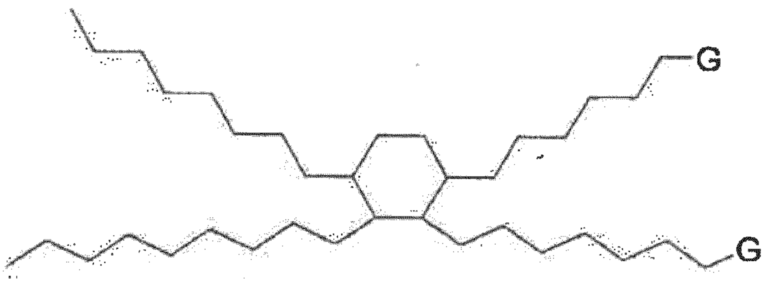

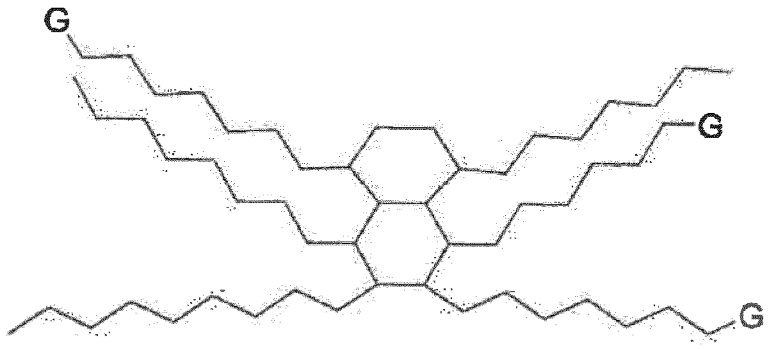

G=$NH_2$;

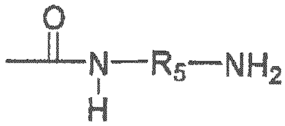

and

$R_5$ denoting $-(CH_2-CH_2-NH)_x-CH_2-CH_2-$ with x between 0 and 5, $-(CH_2)_y-$ with y between 2 and 12, or

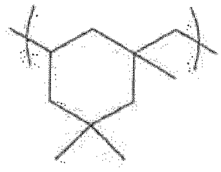

;

- the polyether-amines

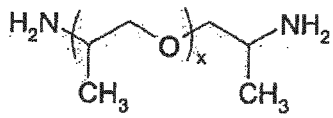

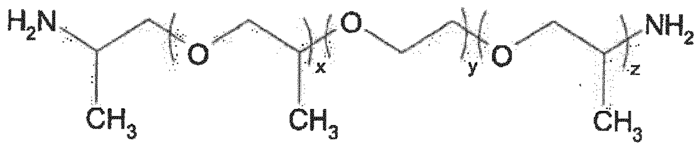

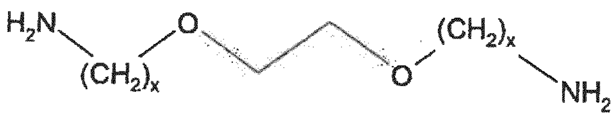

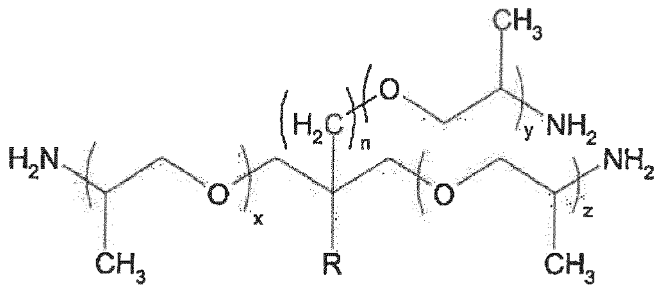

with x, y, z and n ranging from 1 to 1000; and

- the diamines of formula:

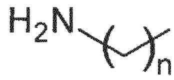

n = 3 to 12.

**2.** Composition according to Claim 1, **characterized in that** it contains from 1% to 95% by weight, preferably from 10% to 90% by weight, of cork or of a cork-based material, relative to the total weight of the composition.

**3.** Composition according to either of the preceding claims, **characterized in that** it contains from 5% to 99% by weight, preferably from 10% to 90% by weight, of binder which comprises one or more polyepoxides, relative to the total weight of the composition.

**4.** Composition according to any one of the preceding claims, **characterized in that** the weight ratio of cork or cork-based material to binder which comprises one or more polyepoxides ranges from 0.01 to 20, better still from 0.1 to 10.

**5.** Composition according to any one of the preceding claims, **characterized in that** it is free of bisphenol A and derivatives thereof.

**6.** Composition according to any one of the preceding claims, **characterized in that** compound (A) including at least two epoxy groups is prepared from a polyol comprising two or more than two hydroxyl groups, and from epichlorohydrin, epibromohydrin or glycidol, or via the allylation and oxidation method.

**7.** Composition according to any one of the preceding claims, **characterized in that** it comprises one or more additives, which are preferably biosourced.

**8.** Composition according to Claim 7, **characterized in that** the additive(s) are chosen from homopolymers or copolymers of which at least one of the monomers is chosen from vinylidene chloride or fluoride, vinyl chloride, methacrylonitrile, acrylonitrile, a $C_{1-5}$ alkyl methacrylate, styrene and ethylene; cellulose polymers; latices; silicone oils; paraffins; natural waxes; pore-forming agents; glass beads, and mixtures thereof.

**9.** Composition according to Claim 7 or 8, **characterized in that** the additive(s) are present in an amount ranging from 0.1% to 20% by weight, better still from 1% to 10% by weight, relative to the total weight of the composition.

**10.** Composition according to Claim 6, **characterized in that** the polyols are chosen from mononuclear aromatic alcohols, dinuclear aromatic alcohols, polynuclear aromatic alcohols and aliphatic alcohols.

**11.** Composition according to any one of Claims 1 to 5 and 7 to 9, **characterized in that** the compounds (A) containing two or more than two epoxy groups are chosen from:

- the vanillin (or coniferyl alcohol) derivatives of formulae:

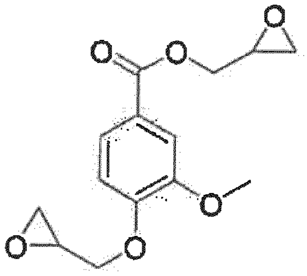 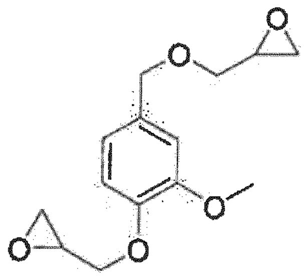 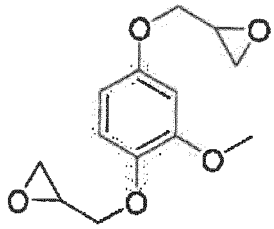,

- the para-coumaryl alcohol derivatives of formulae:

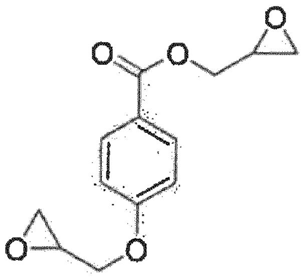 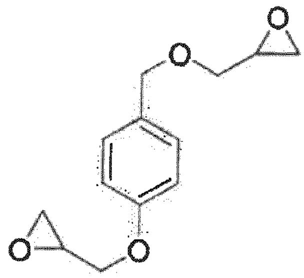 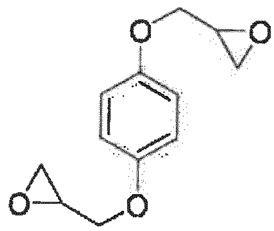,

- the sinapyl alcohol derivatives of formulae:

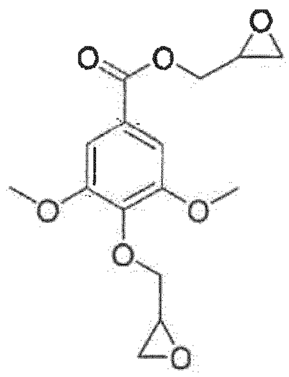 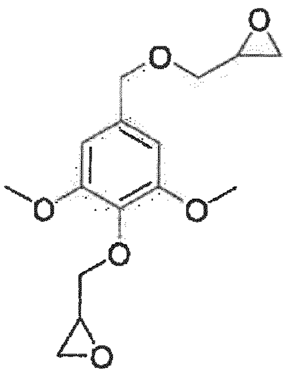 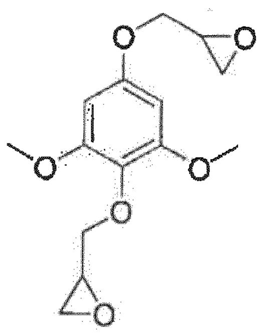,

- the gallic acid derivative of formula:

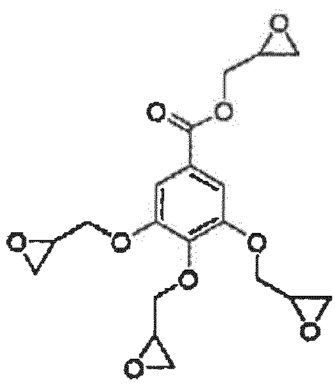,

- epoxidized phloroglucinol

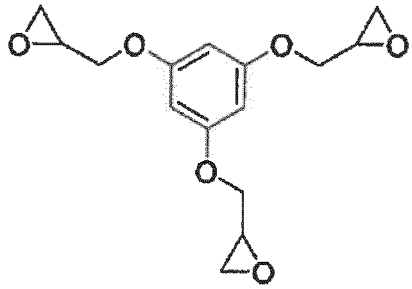

,

- the polyepoxidized cardanol of formula:

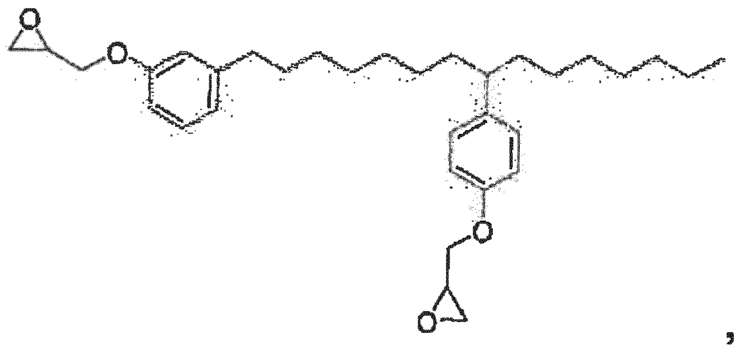

,

- polypropylene glycol diglycidyl ether

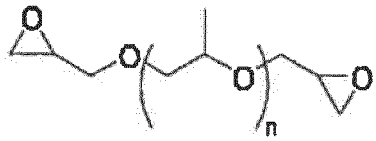

with n between 1 and 1000,
- epoxidized oils and epoxidized fatty ester or acid derivatives thereof and
- epoxidized tea tannins and epoxidized catechin.

**12.** Process for preparing the composition according to any one of the preceding claims, **characterized in that** it comprises the following steps:

(i) mixing cork or cork-based material with at least one compound (A) including two or more than two epoxy groups and at least one compound (B) including two or more than two amine groups as defined in Claim 1, compounds (A) and (B) not being molecules classified as carcinogenic-mutagenic-reprotoxic (or CMR), classes 1A, 1B and 2, at a temperature ranging from 0 to 150°C, preferably from 10 to 50°C, at atmospheric pressure, for a time ranging from 5 to 120 minutes, and
(ii) heating to a temperature ranging from -20 to 200°C, preferably from 50 to 150°C, at atmospheric pressure, for a time ranging from 15 to 150 minutes.

**13.** Process according to Claim 12, **characterized in that** it comprises an additional preliminary step ($i_0$) consisting in preparing compound (A) including at least two epoxy groups from a polyol comprising two or more than two hydroxyl groups, and from epichlorohydrin, epibromohydrin or glycidol, or via the allylation and oxidation method.

**14.** Composition **characterized in that** it may be obtained via the process according to either of Claims 12 and 13.

**15.** Process for manufacturing a stopper, comprising the composition preparation process according to either of Claims 12 and 13.

**16.** Use of polyepoxides resulting from the mixing of one or more compounds (A) including two or more than two epoxy groups with one or more compounds (B) including two or more than two amine groups, as defined in Claim 1, as binder for cork or a cork-based material, compounds (A) and (B) not being molecules classed as carcinogenic-mutagenic-reprotoxic (or CMR), classes 1A, 1B and 2.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 8283394 B
- FR 2672002